# EUROPEAN PATENT SPECIFICATION

(11) **EP 0 830 774 B1**
(45) Date of publication and mention of the grant of the patent: **06.10.2004**
(21) Application number: 96916695.8
(22) Date of filing: 03.06.1996
(51) Int. Cl.: H04L 29/06

(54) **INTERNET SERVER ACCESS CONTROL AND MONITORING SYSTEMS**
ZUGANGSKONTROLLE UND ÜBERWACHUNGSSYSTEM FÜR INTERNETSERVER
SYSTEMES DE CONTROLE ET DE SURVEILLANCE D'ACCES A DES SERVEURS INTERNET

(30) Priority: 07.06.1995 US 474096; 07.06.1995 US 486797
(43) Date of publication of application: 25.03.1998
(73) Proprietor: divine technology ventures, Chicago, Illinois 60622 (US)
(72) Inventor: LEVERGOOD, Thomas, Mark, Hopkinton, MA 01748 (US); STEWART, Lawrence, C., Burlington, MA 01803 (US); MORRIS, Stephen, Jeffrey, Westford, MA 01886 (US); PAYNE, Andrew, C., Lincoln, MA 01773 (US); TREESE, George, Winfield, Newton, MA 02164 (US); GIFFORD, David, K., Weston, MA 02193 (US)
(74) Representative: Style, Kelda Camilla Karen
(86) International application number: PCT/US1996/007838
(87) International publication number: WO 1996/042041

(56) References cited:
- EP-A- 0 456 920
- EP-A- 0 645 688
- WO-A-94/03959
- IEEE MULTIMEDIA, vol. 1, no. 1, 1994, COMPUTER SOCIETY US, pages 37-46, XP000440887
- IEEE NETWORK: THE MAGAZINE OF COMPUTER COMMUNICATIONS, vol. 9, no. 3, May 1995, NEW YORK US, pages 12-20, XP000505280 A.K.CHOUDHURY ET AL: "COPYRIGHT PROTECTION FOR ELECTRONIC PUBLISHING OVER COMPUTER NETWORKS"

## Description

### Reference to Appendix

A portion of the disclosure of this patent document contains material which is subject to copyright protection. The copyright owner has no objection to the facsimile reproduction by any one of the patent disclosure, as it appears in the Patent and Trademark Office patent files or records, but otherwise reserves all copyright rights whatsoever.

### Background of the Invention

The Internet, which started in the late 1960s, is a vast computer network consisting of many smaller networks that span the entire globe. The Internet has grown exponentially, and millions of users ranging from individuals to corporations now use permanent and dial-up connections to use the Internet on a daily basis worldwide. The computers or networks of computers connected within the Internet, known as "hosts", allow public access to databases featuring information in nearly every field of expertise and are supported by entities ranging from universities and government to many commercial organizations.

The information on the Internet is made available to the public through "servers". A server is a system running on an Internet host for making available files or documents contained within that host. such files are typically stored on magnetic storage devices, such as tape drives or fixed disks, local to the host. An Internet server may distribute information to any computer that requests the files on a host. The computer making such a request is known as the "client", which may be an Internet-connected workstation, bulletin board system or home personal computer (PC).

TCP/IP (Transmission Control Protocol/Internet Protocol) is one networking protocol that permits full use of the Internet. All computers on a TCP/IP network need unique ID codes. Therefore, each computer or host on the Internet is identified by a unique number code, known as the IP (Internet Protocol) number or address, and corresponding network and computer names. In the past, an Internet user gained access to its resources only by identifying the host computer and a path through directories within the host's storage to locate a requested file. Although various navigating tools have helped users to search resources on the Internet without knowing specific host addresses, these tools still require a substantial technical knowledge of the Internet.

The World-Wide Web (Web) is a method of accessing information on the Internet which allows a user to navigate the Internet resources intuitively, without IP addresses or other technical knowledge. The Web dispenses with command-line utilities which typically require a user to transmit sets of commands to communicate with an Internet server. Instead, the Web is made up of hundreds of thousands of interconnected "pages", or documents, which can be displayed on a computer monitor. The Web pages are provided by hosts running special servers. Software which runs these Web servers is relatively simple and is available on a wide range of computer platforms including PC's. Equally available is a form of client software, known as a Web "browser", which is used to display Web pages as well as traditional non-Web files on the client system. Today, the Internet hosts which provide Web servers are increasing at a rate of more than 300 per month, en route to becoming the preferred method of Internet communication.

Created in 1991, the Web is based on the concept of "hypertext" and a transfer method known as "HTTP" (Hypertext Transfer Protocol]). HTTP is designed to run primarily over TCP/IP and uses the standard Internet setup, where a server issues the data and a client displays or processes it. One format for information transfer is to create documents using Hypertext Markup Language (HTML). HTML pages are made up of standard text as well as formatting codes which indicate how the page should be displayed. The Web client, a browser, reads these codes in order to display the page. The hypertext conventions and related functions of the world wide web are described in the appendices of U.S. Patent Application Serial No. 08/328,133, filed on October 24, 1994, by Payne et al. which issued as United States Patent No. 5,715,314.

Each Web page may contain pictures and sounds in addition to text. Hidden behind certain text, pictures or sounds are connections, known as "hypertext links" ("links"), to other pages within the same server or even on other computers within the Internet. For example, links may be visually displayed as words or phrases that may be underlined or displayed in a second color. Each link is directed to a web page by using a special name called a URL (Uniform Resource Locator). URLs enable a Web browser to go directly to any file held on any Web server. A user may also specify a known URL by writing it directly into the command line on a Web page to jump to another Web page.

The URL naming system consists of three parts: the transfer format, the host name of the machine that holds the file, and the path to the file. An example of a URL may be:
*http:*//*www.college.univ.edu*/*Adir*/*Bdir*/*Cdir*/*page*.*html*,
where "http" represents the transfer protocol; a colon and two forward slashes (://) are used to separate the transfer format from the host name; "www.college.univ.edu" is the host name in which "www" denotes that the file being requested is a Web page; "/Adir/Bdir/Cdir" is a set of directory names in a tree structure, or a path, on the host machine; and "page.html" is the file name with an indication that the file is written in HTML.

The Internet maintains an open structure in which exchanges of information are made cost-free without restriction. The free access format inherent to the Internet, however, presents difficulties for those information providers requiring control over their Internet servers. Consider for example, a research organization that may want to make certain technical information available on its Internet server to a large group of colleagues around the globe, but the information must be kept confidential. Without means for identifying each client, the organization would not be able to provide information on the network on a confidential or preferential basis. In another situation, a company may want to provide highly specific service tips over its Internet server only to customers having service contracts or accounts.

Access control by an Internet server is difficult for at least two reasons. First, when a client sends a request for a file on a remote Internet server, that message is routed or relayed by a web of computers connected through the Internet until it reaches its destination host. The client does not necessarily know how its message reaches the server. At the same time, the server makes responses without ever knowing exactly who the client is or what its IP address is. While the server may be programmed to trace its clients, the task of tracing is often difficult, if not impossible. Secondly, to prevent unwanted intrusion into private local area networks (LAN), system administrators implement various data-flow control mechanisms, such as the Internet "firewalls", within their networks. An Internet firewall allows a user to reach the Internet anonymously while preventing intruders of the outside world from accessing the user's.LAN.

EP-A-456920 relates to remote authentication and authorisation in a distributed data processing system wherein, for example, a plurality of data processing systems connected by a communications link. It also discusses the authentication and authorisation of a process at one of the data processing systems for the use of a service at another one of the data processing systems.

### Summary of the Invention

The present invention relates to methods of processing service requests from a client to a server through a network. In particular the present invention is applicable to processing client requests in an HTTP (Hypertext Transfer Protocol) environment, such as the World-Wide Web (Web). One aspect of the invention involves forwarding a service request from the client to the server and appending a session identification (SID) to the request and to subsequent service requests from the client to the server within a session of requests. In a preferred embodiment, the present method involves returning the SID from the server to the client upon an initial service request made by the client. A valid SID may include an authorization identifier to allow a user to access controlled files.

In a preferred embodiment, a client request is made with a Uniform Resource Locator (URL) from a Web browser. Where a client request is directed to a controlled file without an SID, the Internet server subjects the client to an authorization routine prior to issuing the SID, the SID being protected from forgery. A content server initiates the authorization routine by redirecting the client's request to an authentication server which may be at a different host. Upon receiving a redirected request, the authentication server returns a response to interrogate the client and then issues an SID to a qualified client. For a new client, the authentication server may open a new account and issue an SID thereafter. A valid SID typically comprises a user identifier, an accessible domain, a key identifier, an expiration time such as date, the IP address of the user computer, and an unforgeable digital signature such as a cryptographic hash of all of the other items in the SID encrypted with a secret key. The authentication server then forwards a new request consisting of the original URL appended by the SID to the client in a REDIRECT. The modified request formed by a.new URL is automatically forwarded by the client browser to the content server.

When the content server receives a URL request accompanied by an SID, it logs the URL with the SID and the user IP address in a transaction log and proceeds to validate the SID. When the SID is so validated, the content server sends the requested document for display by the client's Web browser.

In the preferred embodiment, a valid SID allows the client to access all controlled files within a protection domain without requiring further authorization. A protection domain is defined by the service provider and is a collection of controlled files of common protection within one or more servers.

When a client accesses a controlled Web page with a valid SID, the user viewing the page may want to traverse a link to view another Web page. There are several possibilities. The user may traverse a link to another page in the same path. This is called a "relative link". A relative link may be made either within the same domain or to a different domain. The browser on the client computer executes a relative link by rewriting the current URL to replace the old controlled page name with a new one. The new URL retains all portions of the old, including the SID, except for the new page name. If the relative link points to a page in the same protection domain, the SID remains valid, and the request is honored. However, if the relative link points to a controlled page in a different protection domain, the SID is no longer valid, and the client is automatically redirected to forward the rewritten URL to the authentication server to update the SID. The updated or new SID provides access to the new domain if the user is qualified.

The user may also elect to traverse a link to a document in a different path. This is called an "absolute link". In generating a new absolute link, the SID is overwritten by the browser. In the preferred embodiment, the content server, in each serving of a controlled Web page within the domain, filters the page to include the current SID in each absolute URL on the page. Hence, when the user elects to traverse an absolute link, the browser is facilitated with an authenticated URL which is directed with its SID to a page in a different path. In another embodiment, the content server may forego the filtering procedure as above-described and redirect an absolute URL to the authentication server for an update.

An absolute link may also be directed to a controlled file in a different domain. Again, such a request is redirected to the authentication server for processing of a new SID. An absolute link directed to an uncontrolled file is accorded an immediate access.

In another embodiment, a server access control may be maintained by programming the client browser to store an SID or a similar tag for use in each URL call to that particular server. This embodiment, however, requires a special browser which can handle such communications and is generally not suitable for the standard browser format common to the Web.

Another aspect of the invention is to monitor the frequency and duration of access to various pages both controlled and uncontrolled. A transaction log within a content server keeps a history of each client access to a page including the link sequence through which the page was accessed. Additionally, the content server may count the client requests exclusive of repeated requests from a common client. Such records provide important marketing feedback including user demand, access pattern, and relationships between customer demographics and accessed pages and access patterns.

The above and other features of the invention including various novel details of construction and combinations of parts will now be more particularly described with reference to the accompanying drawings and pointed out in the claims. It will be understood that the particular devices and methods embodying the invention are shown by way of illustration only and not as limitations of the invention. The principles and features of this invention may be employed in varied and numerous embodiments without departing from the scope of the invention.

### Brief Description of the Drawings:

Figure 1 is a diagram illustrating the Internet operation.
Figure 2A is a flowchart describing the preferred method of Internet server access control and monitoring.
Figure 2B is a related flowchart describing the details of the authentication process.
Figure 3 illustrates an example of a client-server exchange session involving the access control and monitoring method of the present invention.
Figure 4 is an example of a World Wide Web page.
Figure 5 is an example of an authorization form page.
Figure 6 is a diagram describing the details of the translation of telephone numbers to URLs.

### Detailed Description of the Invention:

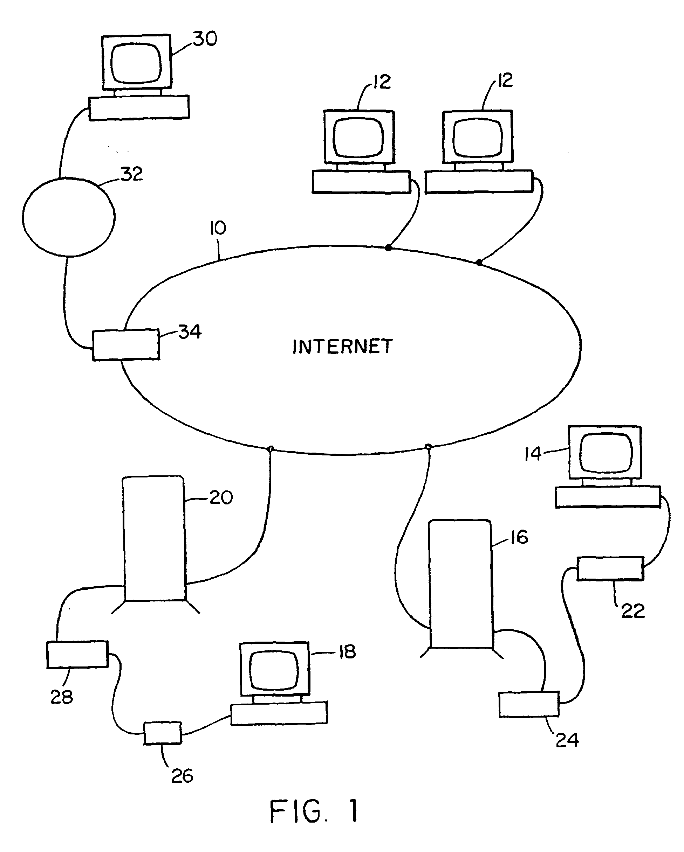

Referring now to the drawings, Figure 1 is a graphical illustration of the Internet. The Internet 10 is a network of millions of interconnected computers 12 including systems owned by Internet providers 16 and information systems (BBS) 20 such as Compuserve^{(tm)} or America Online^{(tm)}. Individual or corporate users may establish connections to the Internet in several ways. A user on a home PC 14 may purchase an account through the Internet provider 16. Using a modem 22, the PC user can dial up the Internet provider to connect to a high speed modem 24 which, in turn, provides a full service connection to the Internet. A user 18 may also make a somewhat limited connection to the Internet through a BBS 20 that provides an Internet gateway connection to its customers.

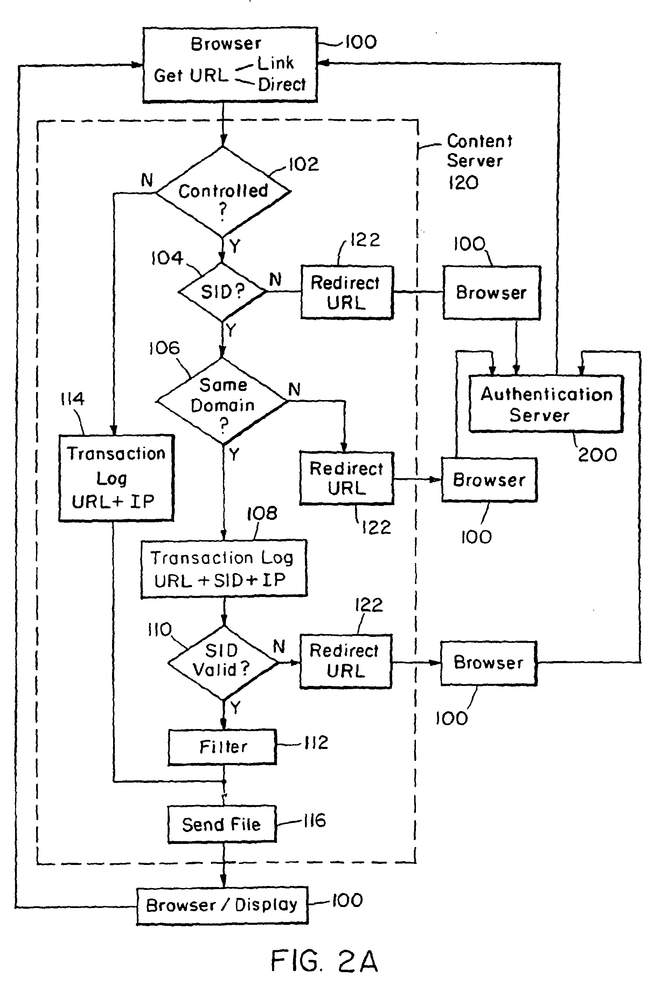

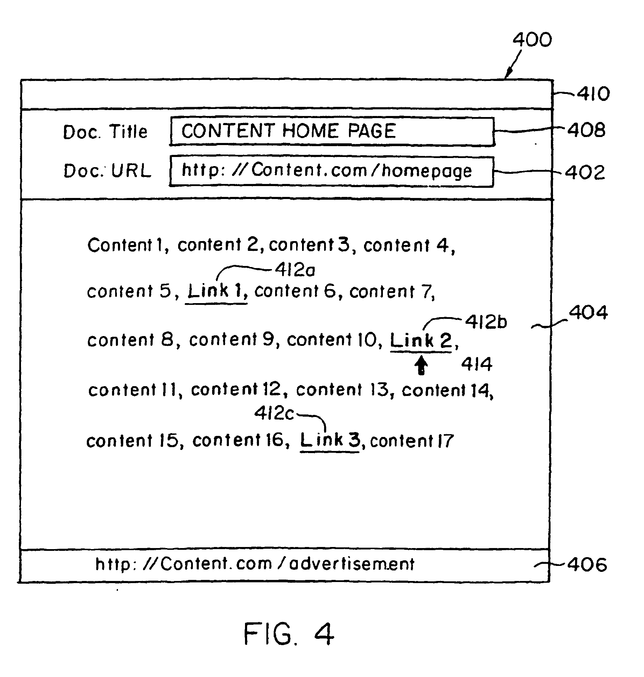

Figure 2A is a flowchart detailing the preferred process of the present invention and Figure 4 illustrates a sample Web page displayed at a client by a browser. The page includes text 404 which includes underlined link text 412. The title bar 408 and URL bar 402 display the title and URL of the current web page, respectively. As shown in Figure 4, the title of the page is "Content Home Page" and the corresponding URL is "http://content.com/homepage". When a cursor 414 is positioned over link text 412b, the page which would be retrieved by clicking a mouse is typically identified in a status bar 406 which shows the URL for that link. In this example the status bar 406 shows that the URL for the pointed link 412b is directed to a page called "advertisement" in a commercial content server called "content". By clicking on the link text, the user causes the browser to generate a URL GET request at 100 in Figure 2A. The browser forwards the request to a content server 120, which processes the request by first determining whether the requested page is a controlled document 102. If the request is directed to an uncontrolled page, as in "advertisement" page in this example, the content server records the URL and the IP address, to the extent it is available, in the transaction log 114. The content server then sends the requested page to the browser 116 for display on the user computer 117.

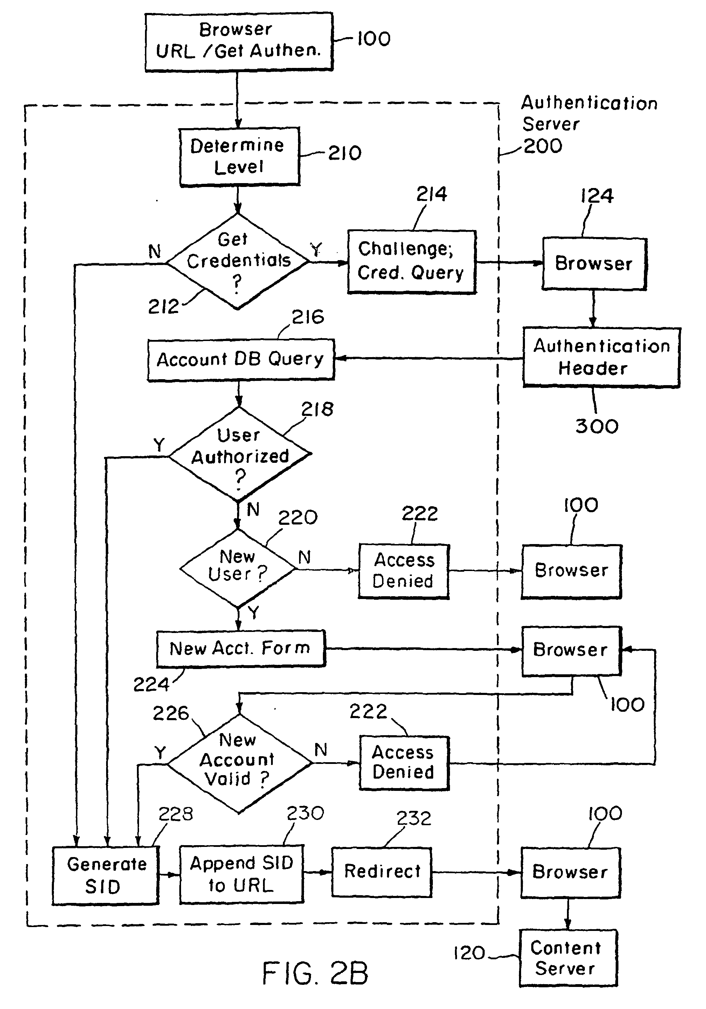

If the request is directed to a controlled page, the content server determines whether the URL contains an SID 102. For example, a URL may be directed to a controlled page name "report", such as "http://content.com/report", that requires an SID. If no SID is present, as in this example, the content server sends a "REDIRECT" response 122 to the browser 100 to redirect the user's initial request to an authentication server 200 to obtain a valid SID. The details of the authentication process are described in Figure 2B and will be discussed later, but the result of the process is an SID provided from the authentication server to the client. In the above example, a modified URL appended with an SID may be: "http://content.com/[SID]/report". The preferred SID is a sixteen character ASCII string that encodes 96 bits of SID data, 6 bits per character. It contains a 32-bit digital signature, a 16-bit expiration date with a granularity of one hour, a 2-bit key identifier used for key management, an 8-bit domain comprising a set of information files to which the current SID authorizes access, and a 22-bit user identifier. The remaining bits are reserved for expansion. The digital signature is a cryptographic hash of the remaining items in the SID and the authorized IP address which are encrypted with a secret key which is shared by the authentication and content servers.

If the initial GET URL contains a SID, the content server determines whether the request is directed to a page within the current domain 106. If the request having a SID is directed to a controlled page of a different domain, the SID is no longer valid and, again, the user is redirected to the authentication server 122.

If the request is for a controlled page within the current domain, the content server proceeds to log the request URL, tagged with SID, and the user IP address in the transaction log 108. The content server then validates the SID 110. Such validation includes the following list of checks: (1) the SID's digital signature is compared against the digital signature computed from the remaining items in the SID and the user IP address using the secret key shared by the authentication and content servers; (2) the domain field of the SID is checked to verify that it is within the domain authorized; and (3) the EXP field of the SID is checked to verify that it is later than the current time.

If the validation passes, the content server searches the page to be forwarded for any absolute URL links contained therein 112, that is, any links directed to controlled documents in different content servers. The content server augments each absolute URL with the current SID to facilitate authenticated accesses across multiple content servers. The requested page as processed is then transmitted to the client browser for display 117. The user viewing the requested Web page may elect to traverse any link on that page to trigger the entire sequence again 100.

Figure 2B describes the details of the authentication process. The content server may redirect the client to an authentication server. The REDIRECT URL might be: "http://auth.com/authenticate?domain=[domain]&URL=http://content.com/report". That URL requests authentication and specifies the domain and the initial URL. In response to the REDIRECT, the client browser automatically sends a GET request with the provided URL.

Whenever the content server redirects the client to the authentication server 200, the authentication server initiates the authorization process by validating that it is for an approved content server and determining the level of authentication required for the access requested 210. Depending on this level, the server may challenge the user 212 for credentials. If the request is for a low level document, the authentication may issue an appropriate SID immediately 228 and forego the credential check procedures. If the document requires credentials, the authentication server sends a "CHALLENGE" response which causes the client browser to prompt the user for credentials 214. A preferred credential query typically consists of a request for user name and password. If the user is unable to provide a password, the access is denied. The browser forms an authorization header 300 from the information provided, and resends a GET request to the authentication server using the last URL along with an authorization header. For example, a URL of such a GET request may be: "http://auth.com/authenticate?domain=[domain]&URL=http://content.corn/report and the authorization header may be:"AUTHORIZE:[authorization]''.

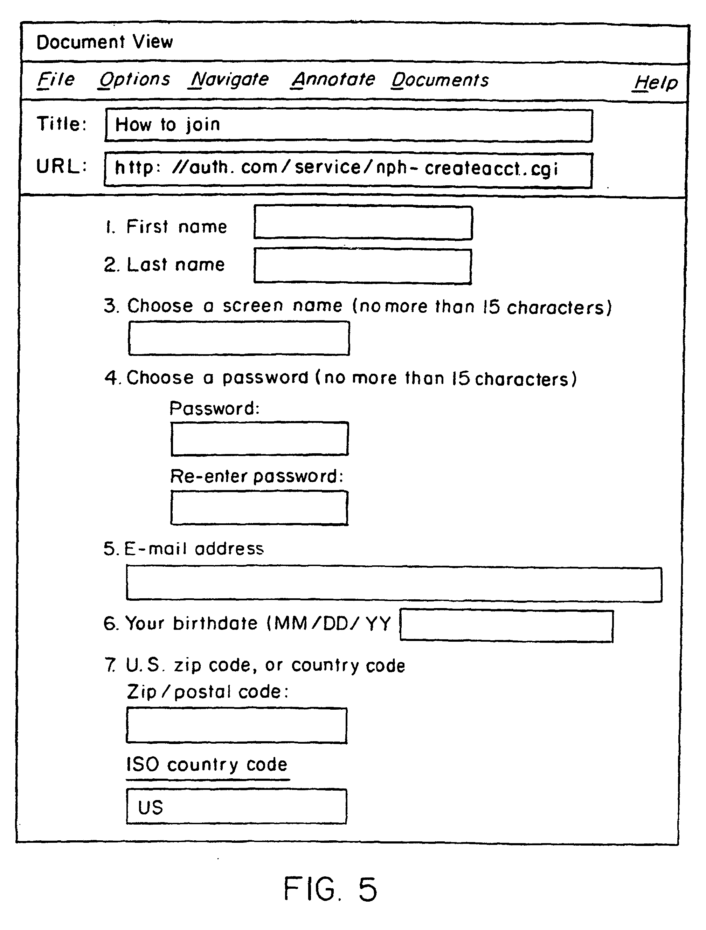

Upon receiving the GET request, the authentication server queries an account database 216 to determine whether the user is authorized 218 to access the requested document. A preferred account database may contain a user profile which includes information for identifying purposes, such as client IP address and password, as well as user demographic information, such as user age, home address, hobby, or occupation, for later use by the content server. If the user is authorized, an SID is generated 228 as previously described. If the user is not cleared for authorization, the authentication server checks to see if the user qualifies for a new account 220. If the user is not qualified to open a new account, a page denying access 222 is transmitted to the client browser 100. If the user is qualified, the new user is sent a form page such as illustrated in Figure 5 to initiate a real-time on-line registration 224. The form may, for example, require personal information and credit references from the user. The browser is able to transmit the data entered by the user in the blanks 502 as a "POST" message to the authentication server. A POST message causes form contents to be sent to the server in a data body other than as part of the URL. If the registration form filled out by the new user is valid 226, an appropriate SID is generated 228. If the registration is not valid, access is again denied 222.

An SID for an authorized user is appended ("tagged") 230 to the original URL directed to a controlled page on the content server. The authentication server then transmits a REDIRECT response 232 based on the tagged URL to the client browser 100. The modified URL, such as "http://content.com/[SID]/report" is automatically forwarded to the content server 120.

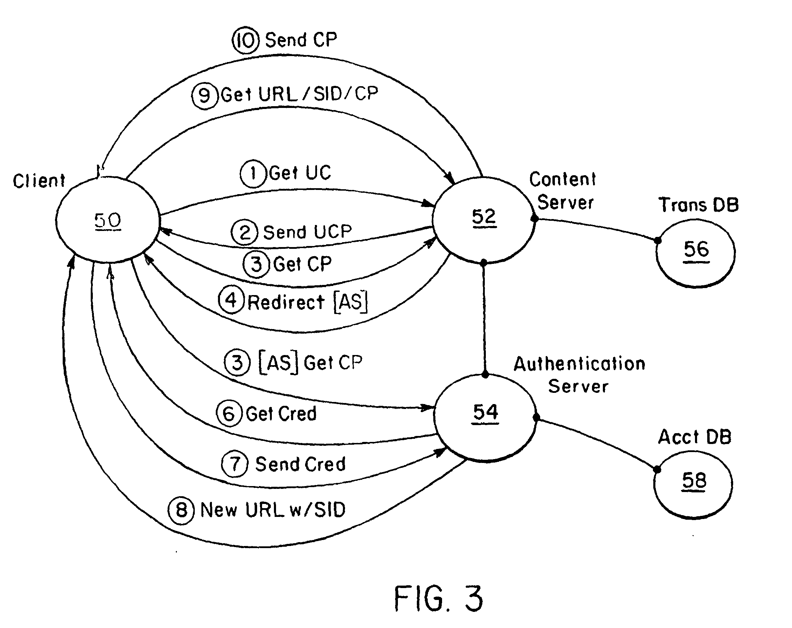

Figure 3, illustrates a typical client-server exchange involving the access control and monitoring method of the present invention. In Step 1, the client 50 running a browser transmits a GET request through a network for an uncontrolled page (UCP). For example, the user may request an advertisement page by transmitting a URL "http://content.com/advertisement", where "content.com" is the server name and "advertisement" is the uncontrolled page name. In Step 2, the content server 52 processes the GET request and transmits the requested page, "advertisement". The content server also logs the GET request in the transaction database 56 by recording the URL, the client IP address, and the current time.

In Step 3, the user on the client machine may elect to traverse a link in the advertisement page directed to a controlled page (CP). For example, the advertisement page may contain a link to a controlled page called "report". Selecting this link causes the client browser 50 to forward a GET request through a URL which is associated with the report file "http://content.com/report". The content server 52 determines that the request is to a controlled page and that the URL does not contain an SID. In Step 4, the content server transmits a REDIRECT response to the client, and, in Step 5, the browser automatically sends the REDIRECT URL to the authentication server 54. The REDIRECT URL sent to the authentication server may contain the following string:
"http: //auth. com/authenticate?domain= [domain] &URL=http: //content.com/report"

The authentication server processes the REDIRECT and determines whether user credentials (CRED) are needed for authorization. In Step 6, the authentication server transmits a "CHALLENGE" response to the client. As previously described, typical credentials consist of user name and password. An authorization header based on the credential information is then forwarded by the client browser to the authentication server. For example, a GET URL having such an authorization header is:
"http://autho.com/authenticate?domain=[domain] &URL=http: //content. com/ report and the authorization header may be:"AUTHORIZE:[authorization]". The authentication server processes the GET request by checking the Account Database 58. If a valid account exists for the user, an SID is issued which authorizes access to the controlled page "report" and all the other pages within the domain.

As previously described, the preferred SID comprises a compact ASCII string that encodes a user identifier, the current domain, a key identifier, an expiration time, the client IP address, and an unforgeable digital signature. In Step 8, the authentication server redirects the client to the tagged URL, "http://content.com/[SID]/report", to the client. In Step 9, the tagged URL is automatically forwarded by the browser as a GET request to the content server. The content server logs the GET request in the Transaction database 56 by recording the tagged URL, the client IP address, and the current time. In Step 10, the content server, upon validating the SID, transmits the requested controlled page "report" for display on the client browser.

According to one aspect of the present invention, the content server periodically evaluates the record contained in the transaction log 56 to determine the frequency and duration of accesses to the associated content server. The server counts requests to particular pages exclusive of repeated requests from a common client in order to determine the merits of the information on different pages for ratings purposes. By excluding repeated calls, the system avoids distortions by users attempting to "stuff the ballot box." In one embodiment, the time intervals between repeated requests by a common client are measured to exclude those requests falling within a defined period of time.

Additionally, the server may, at any given time, track access history within a client-server session. Such a history profile informs the service provider about link transversal frequencies and link paths followed by users. This profile is produced by filtering transaction logs from one or more servers to select only transactions involving a particular user ID (UID). Two subsequent entries, A and B, corresponding to requests from a given user in these logs represent a link traversal from document A to document B made by the user in question. This information may be used to identify the most popular links to a specific page and to suggest where to insert new links to provide more direct access. In another embodiment, the access history is evaluated to determine traversed links leading to a purchase of a product made within commercial pages. This information may be used, for example, to charge for advertising based on the number of link traversals from an advertising page to a product page or based on the count of purchases resulting from a path including the advertisement. In this embodiment, the server can gauge the effectiveness of advertising by measuring the number of sales that resulted from a particular page, link, or path of links. The system can be configured to charge the merchant for an advertising page based on the number of sales that resulted from that page.

According to another aspect of the present invention, a secondary server, such as the authentication server 200 in Figure 2B, may access a prearranged user profile from the account database 216 and include information based on such a profile in the user identifier field of the SID. In a preferred embodiment, the content server may use such an SID to customize user requested pages to include personalized content based on the user identifier field of the SID.

In another aspect of the invention, the user may gain access to domain of servers containing journals or publications through a subscription. In such a situation, the user may purchase the subscription in advance to gain access to on-line documents through the Internet. The user gains access to a subscribed document over the Internet through the authorization procedure as described above where an authorization indicator is preferably embedded in a session identifier. In another embodiment, rather than relying on a prepaid subscription, a user may be charged and billed each time he or she accesses a particular document through the Internet. In that case, authorization may not be required so long as the user is fully identified in order to be charged for the service. The user identification is most appropriately embedded in the session identifier described above.

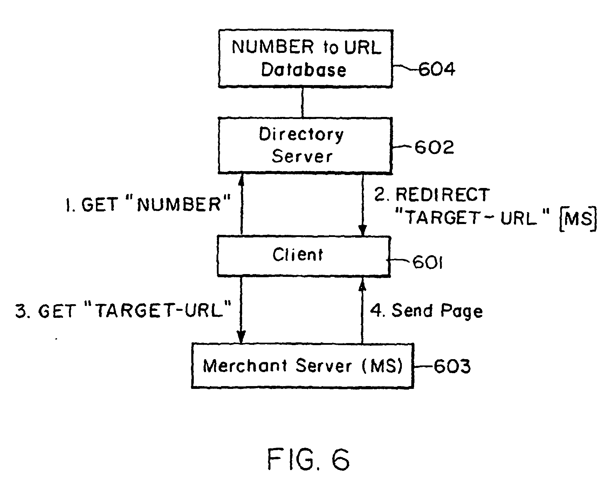

In another aspect of the invention, facilities are provided to allow users to utilize conventional telephone numbers or other identifiers to access merchant services. These merchant services can optionally be protected using SIDs. In a preferred embodiment, as shown in Figure 6, a Web browser client 601 provides a "dial" command to accept a telephone number from a user, as by clicking on a "dial" icon and inputting the telephone number through the keyboard. The browser then constructs a URL of the form "http://directory.net/NUMBER", where NUMBER is the telephone number or other identifier specified by the user. The browser then performs a GET of the document specified by this URL, and contacts directory server 602, sending the NUMBER requested in Message 1.

In another embodiment, implemented with a conventional browser, client 601 uses a form page provided by directory server 601 that prompts for a telephone number or other identifier in place of a "dial" command, and Message 1 is a POST message to a URL specified by this form page.

Once NUMBER is received by directory server 601, the directory server uses database 604 to translate the NUMBER to a target URL that describes the merchant server and document that implements the service corresponding to NUMBER. This translation can ignore the punctuation of the number, therefore embedded parenthesis or dashes are not significant.

In another embodiment an identifier other than a number may be provided. For example, a user may enter a company name or product name without exact spelling. In such a case a "soundex" or other phonetic mapping can be used to permit words that sound alike to map to the same target URL. Multiple identifiers can also be used, such as a telephone number in conjunction with a product name or extension.

In Message 2, Directory server 602 sends a REDIRECT to client 601, specifying the target URL for NUMBER as computed from database 604. The client browser 601 then automatically sends Message 3 to GET the contents of this URL. Merchant server 603 returns this information in Message 4. The server 602 might have returned a Web page to the client to provide an appropriate link to the required document. However, because server 602 makes a translation to a final URL and sends a REDIRECT rather than a page to client 601, the document of message 4 is obtained without any user action beyond the initial dial input.

The Target URL contained in Message 3 can be an ordinary URL to an uncontrolled page, or it can be a URL that describes a controlled page. If the Target URL describes a controlled page then authentication is performed as previously described. The Target URL can also describe a URL that includes an SID that provides a preauthorized means of accessing a controlled page.

Among benefits of the "dial" command and its implementation is an improved way of accessing the Internet that is compatible with conventional telephone numbers and other identifiers. Merchants do not need to alter their print or television advertising to provide an Internet specific form of contact information, and users do not need to learn about URLs.

In the approach a single merchant server can provide multiple services that correspond to different external "telephone numbers" or other identifiers. For example, if users dial the "flight arrival" number they could be directed to the URL for the arrival page, while, if they dial the "reservations" number, they would be directed to the URL for the reservations page. A "priority gold" number could be directed to a controlled page URL that would first authenticate the user as belonging to the gold users group, and then would provide access to the "priority gold'' page. An unpublished "ambassador" number could be directed to a tagged URL that permits access to the "priority gold" page without user authentication.

This invention has particular application to network sales systems such as presented in U.S. Patent Application Serial No. 08/328,133, filed October 24, 1994, by Payne et al. which issued as United States Patent No. 5,715,314.

### Equivalents:

Those skilled in the art will know, or be able to ascertain using no more than routine experimentation, many equivalents to the specific embodiments or the invention described herein. These and all other equivalents are intended to be encompassed by the following claims.

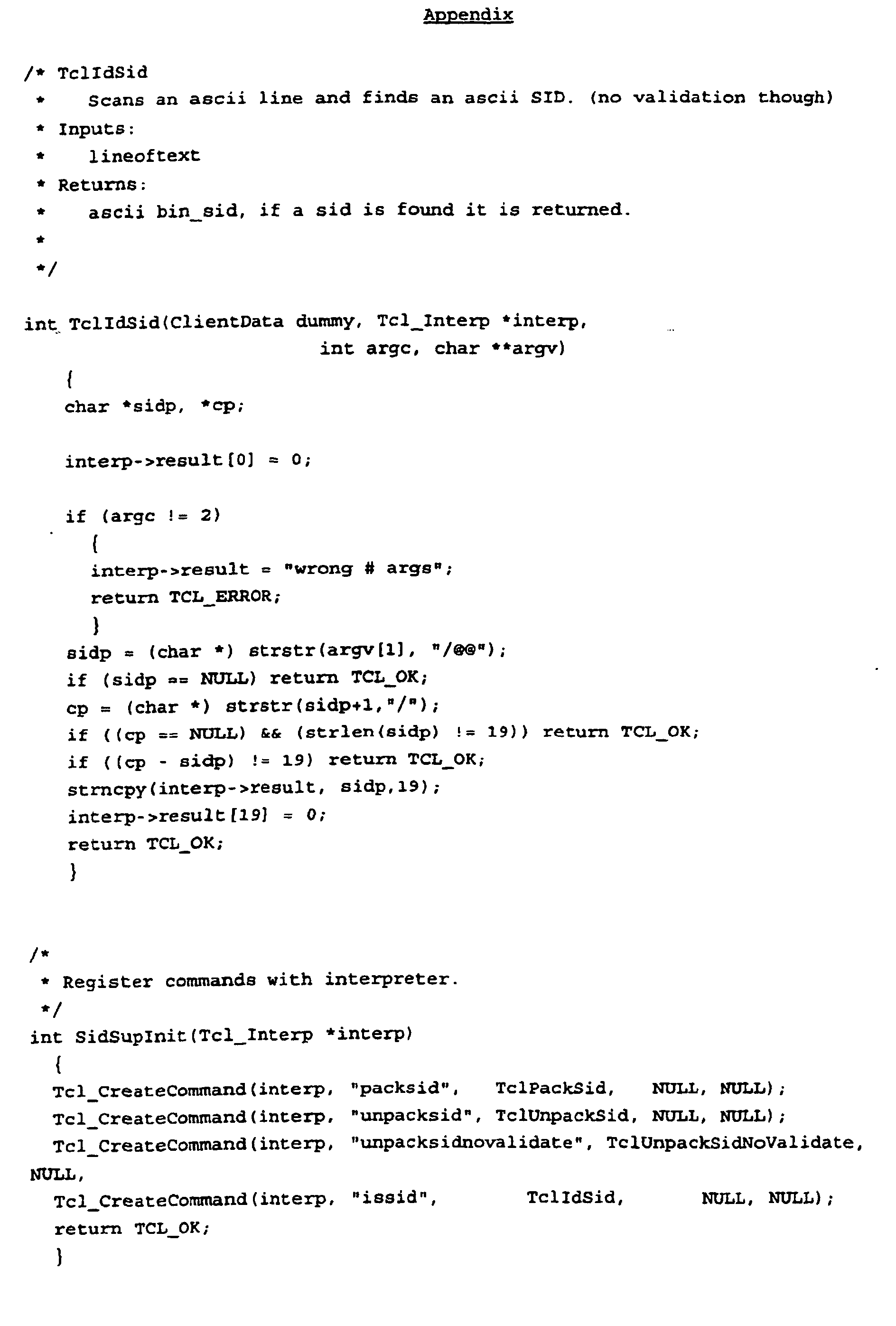

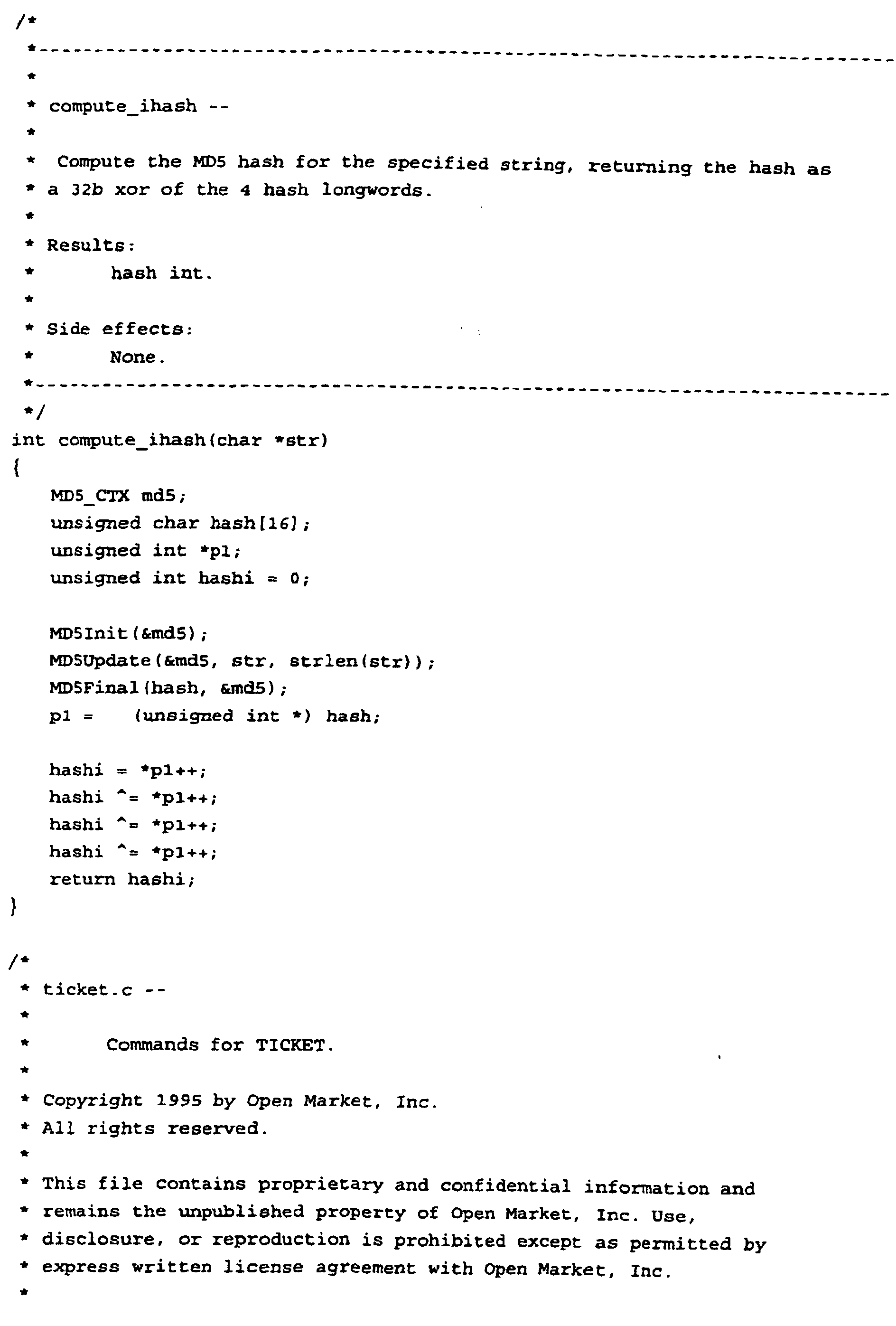

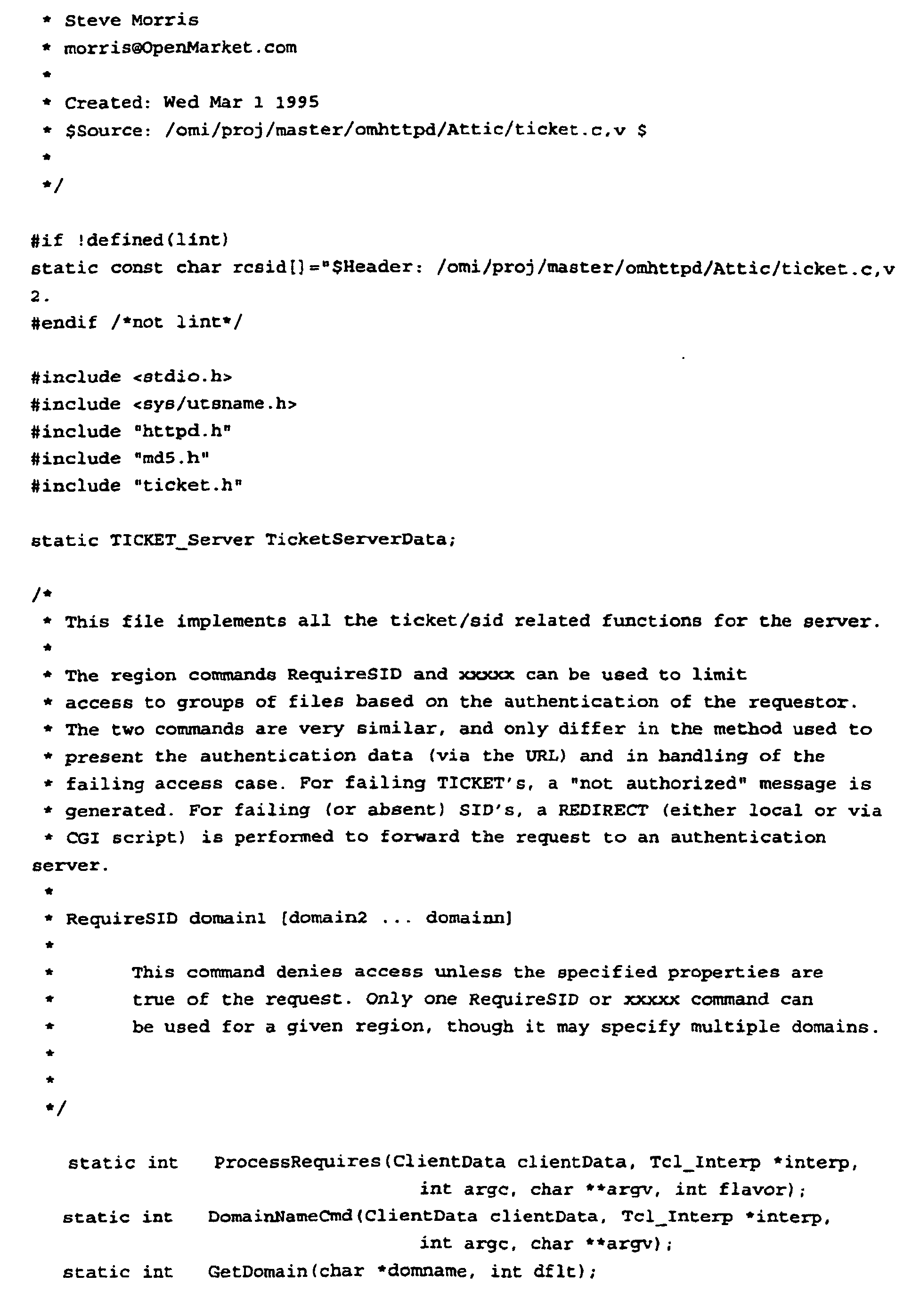

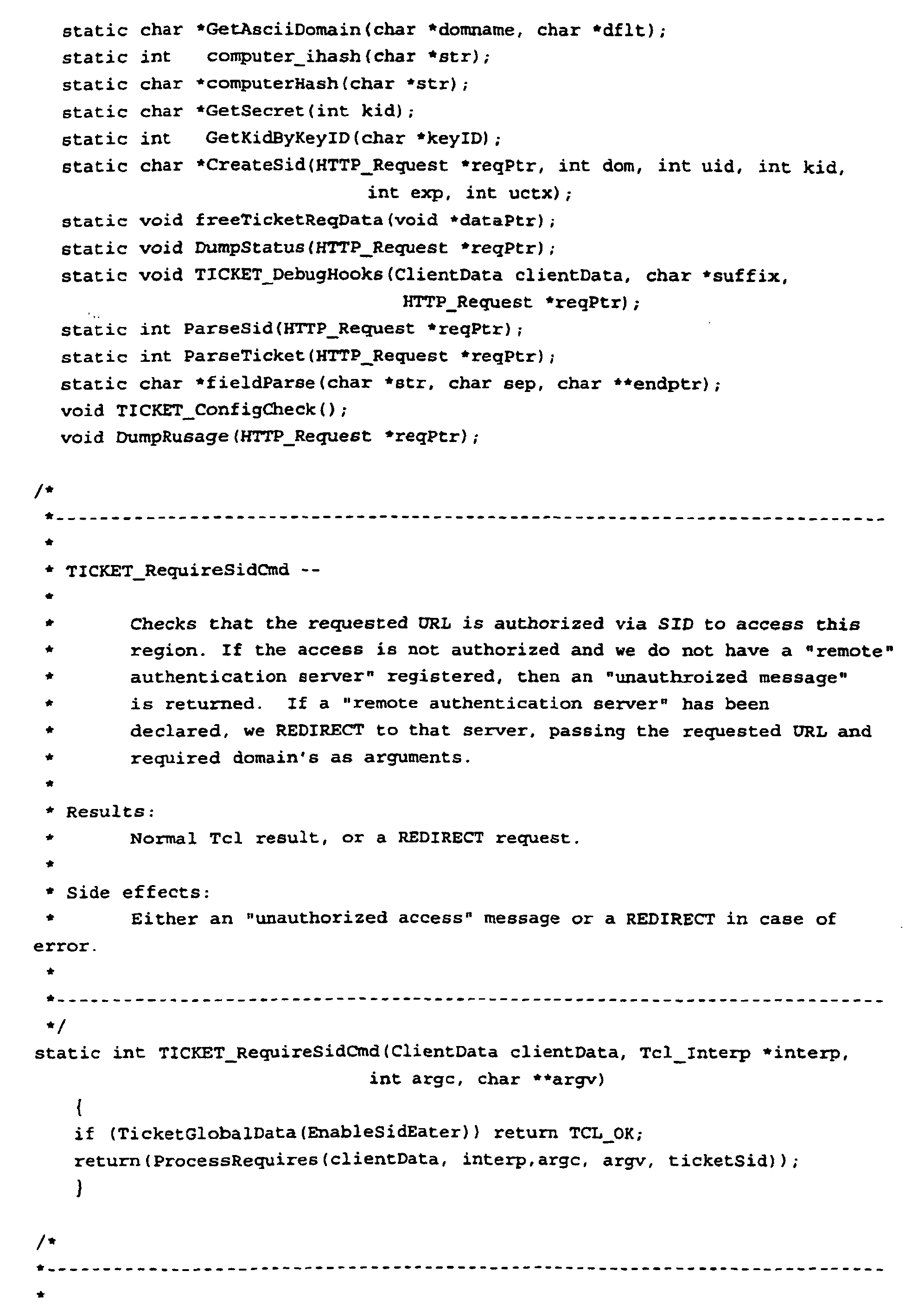

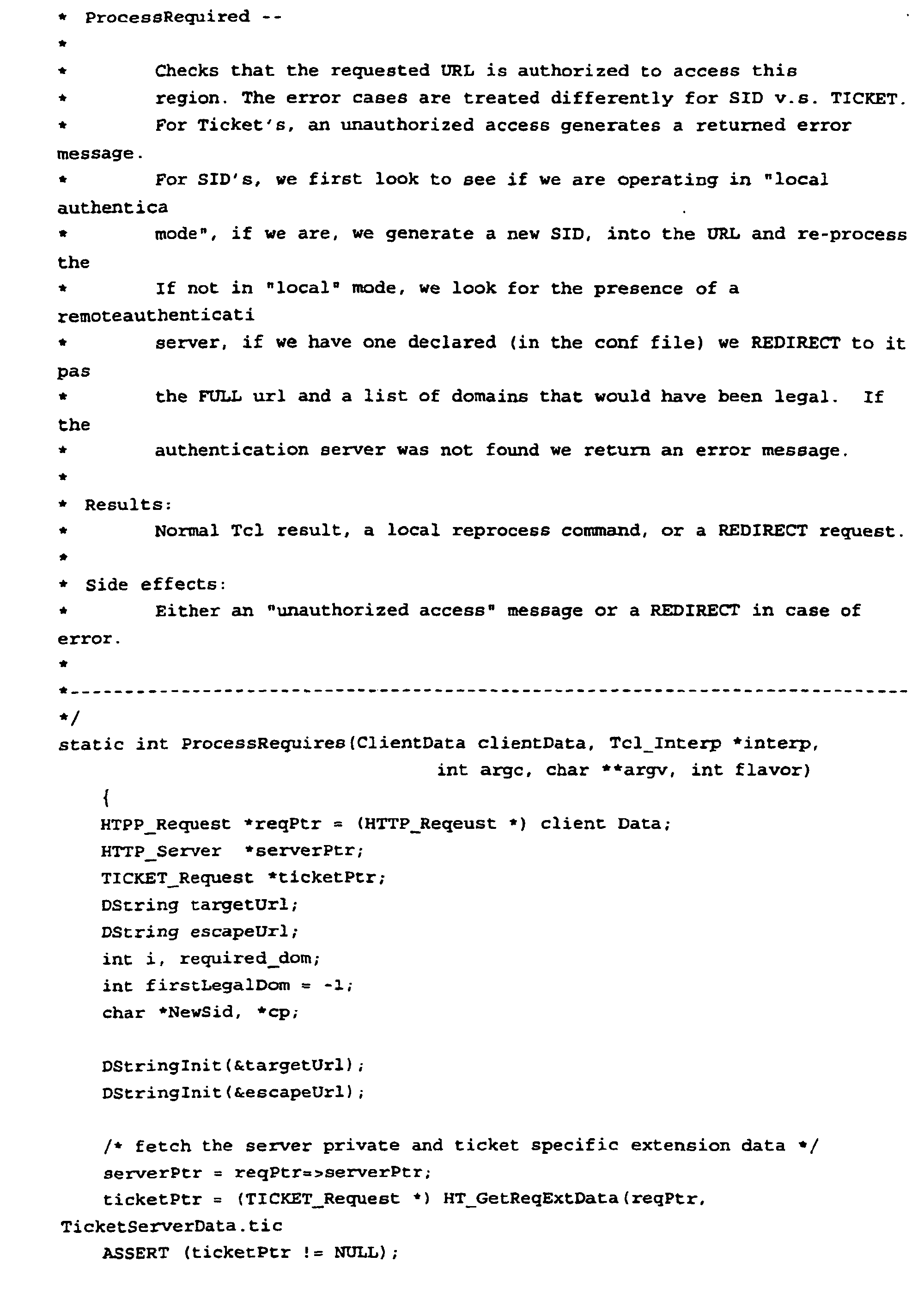

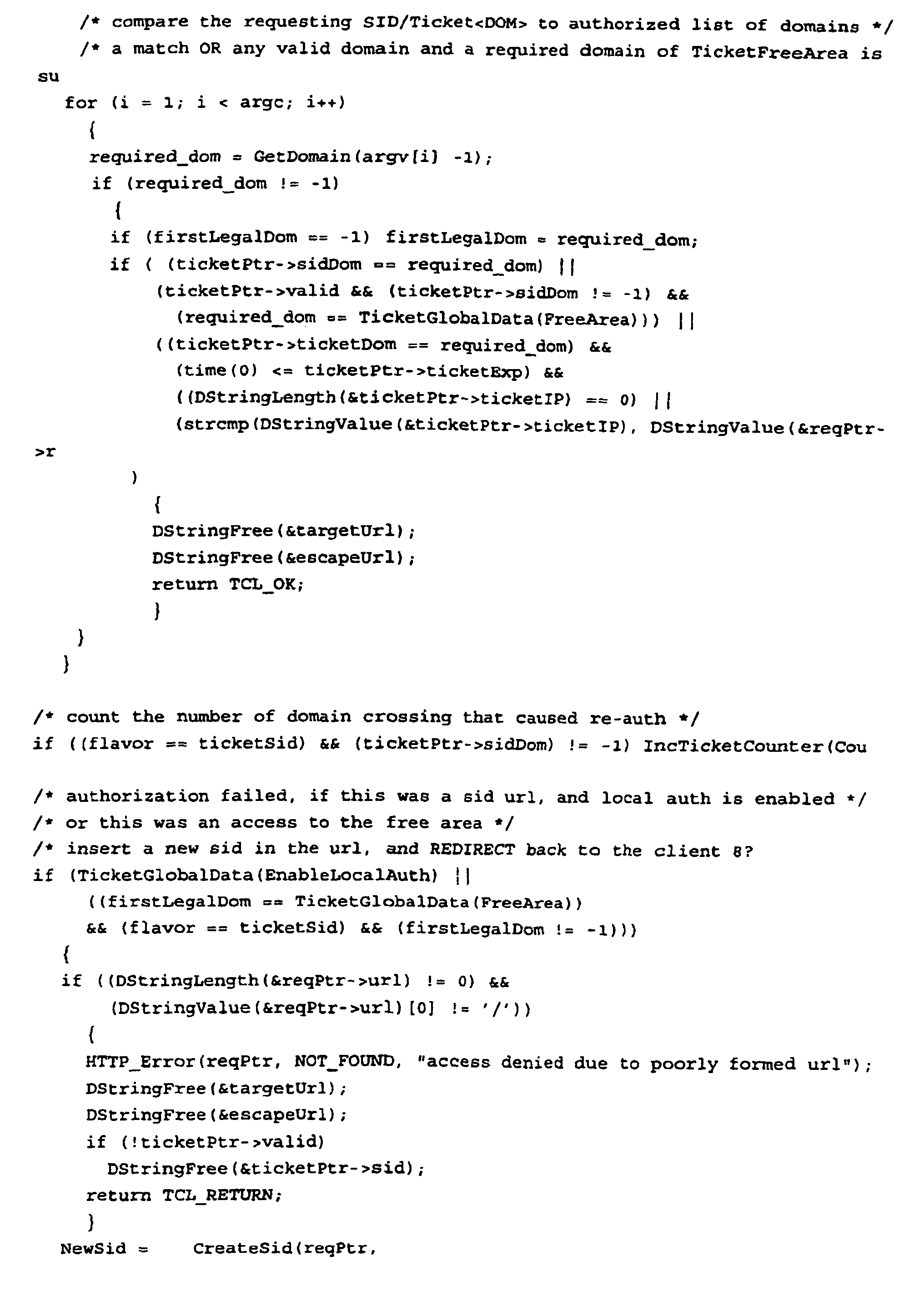

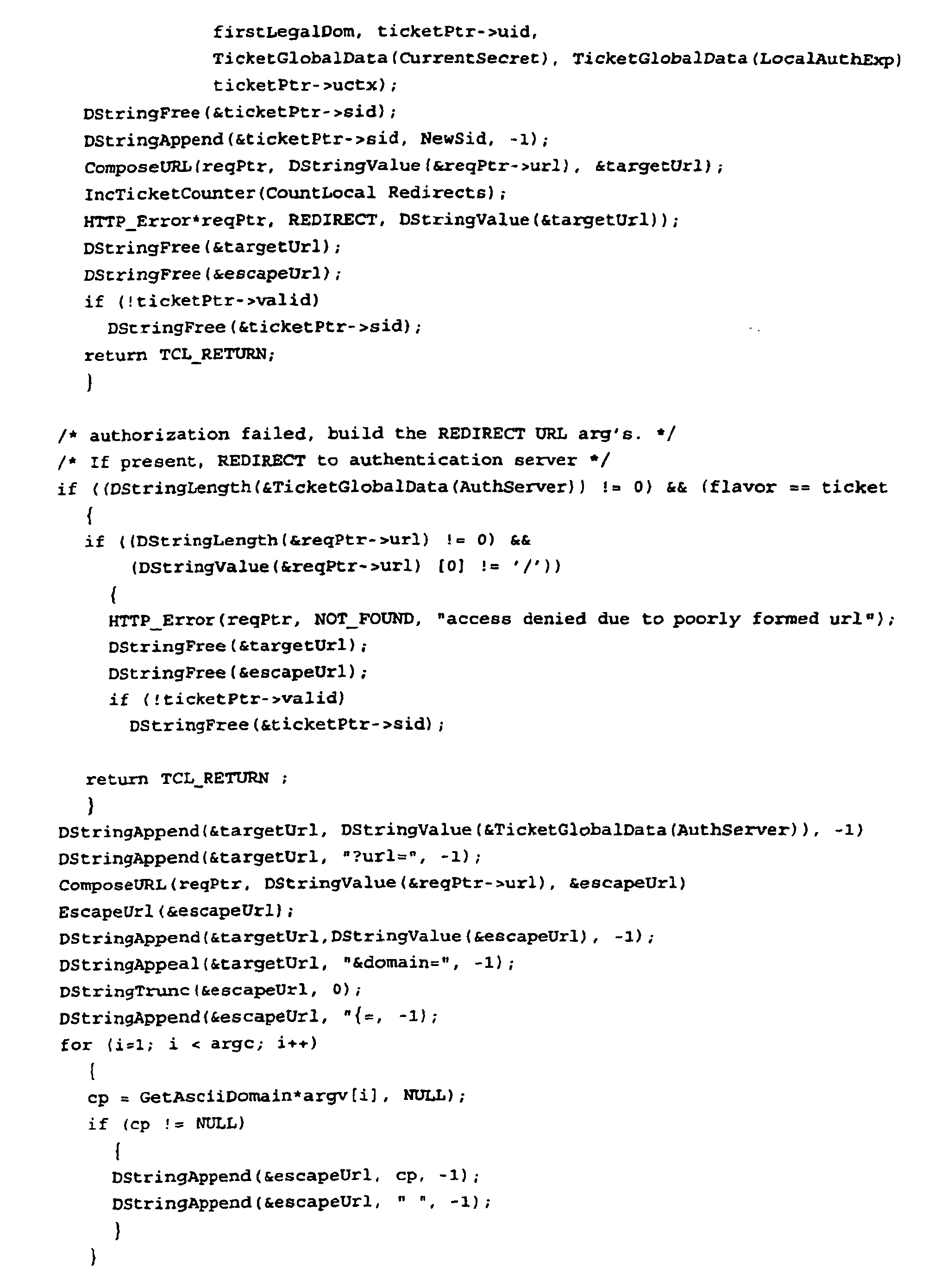

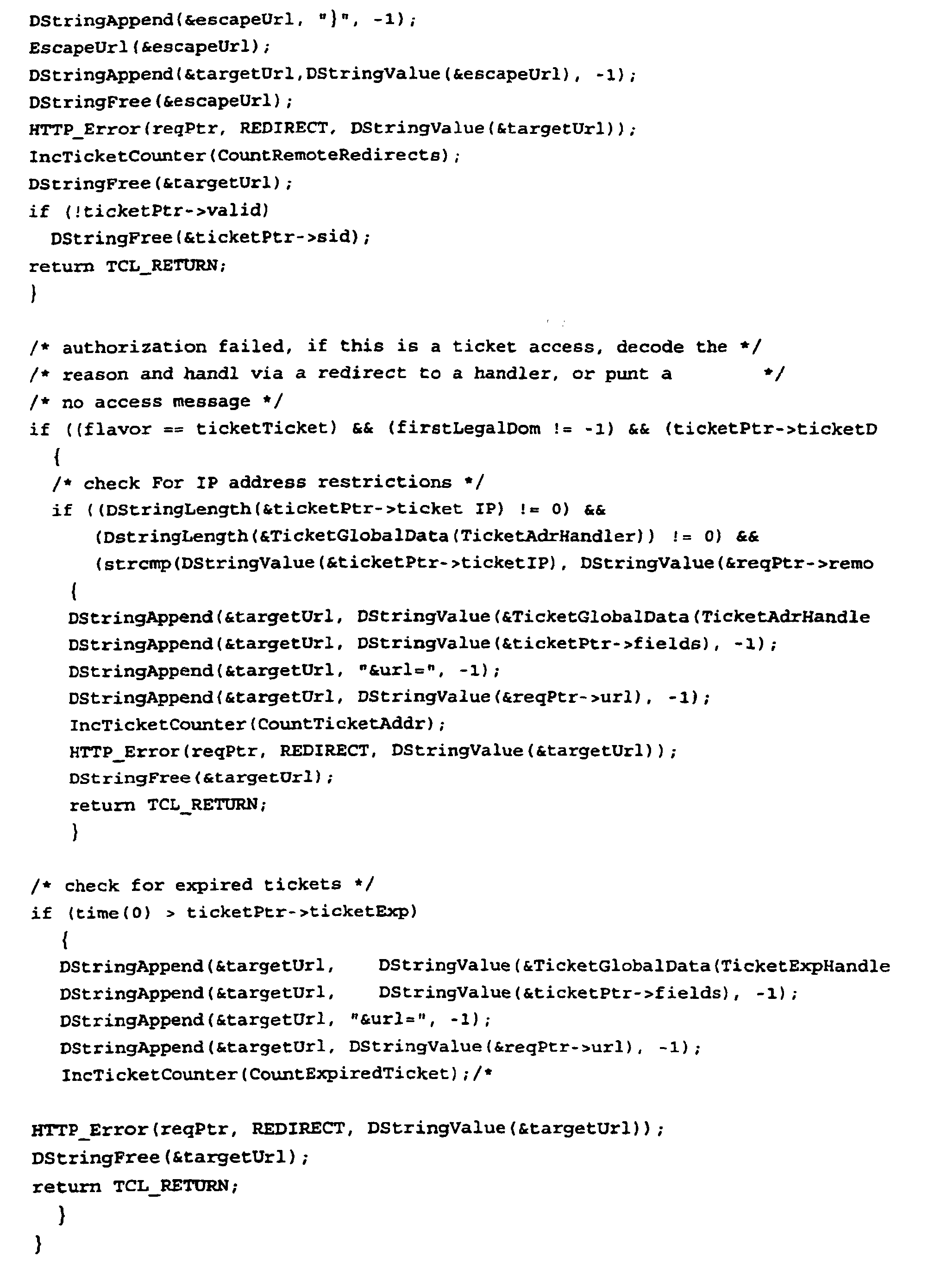

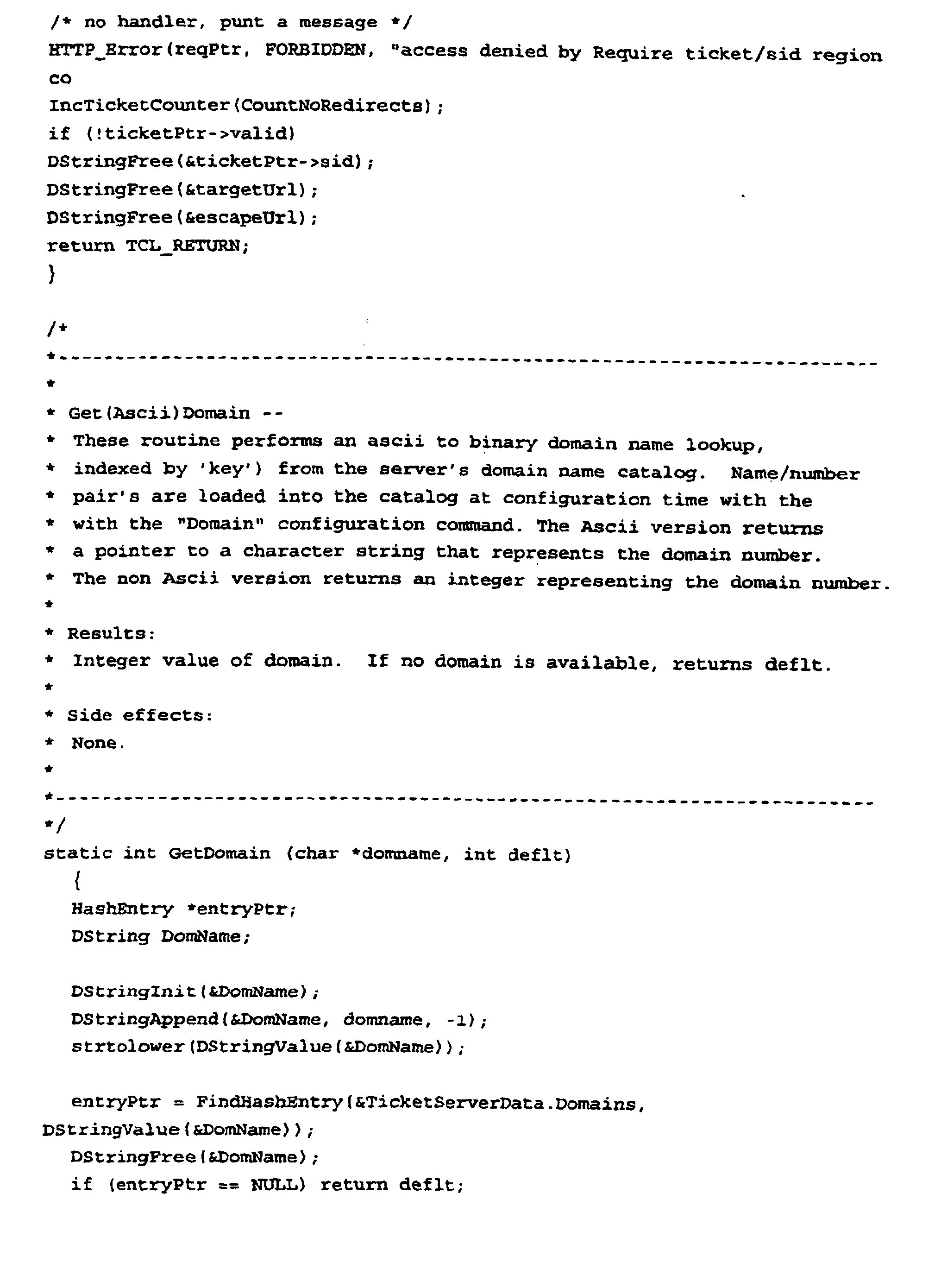

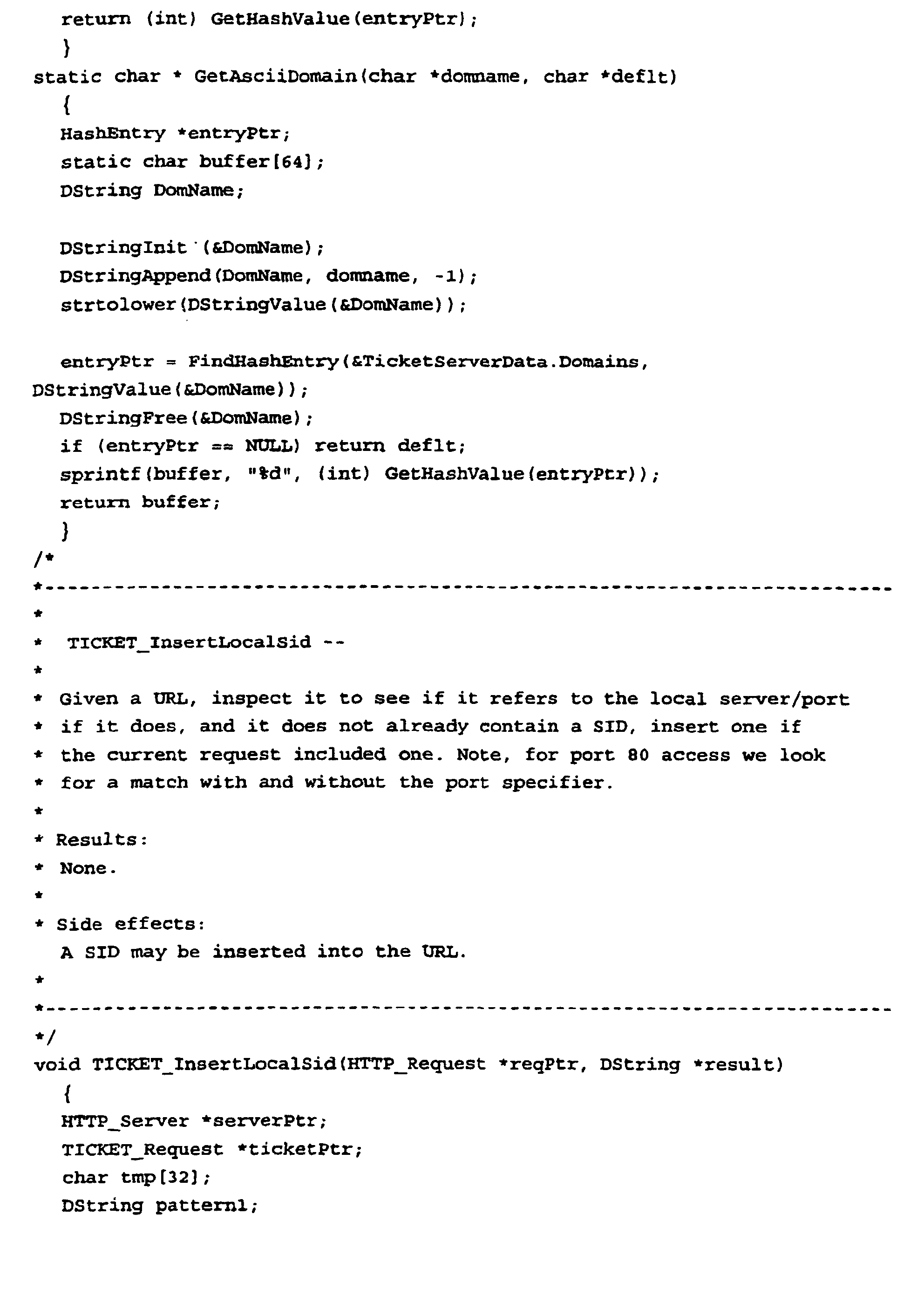

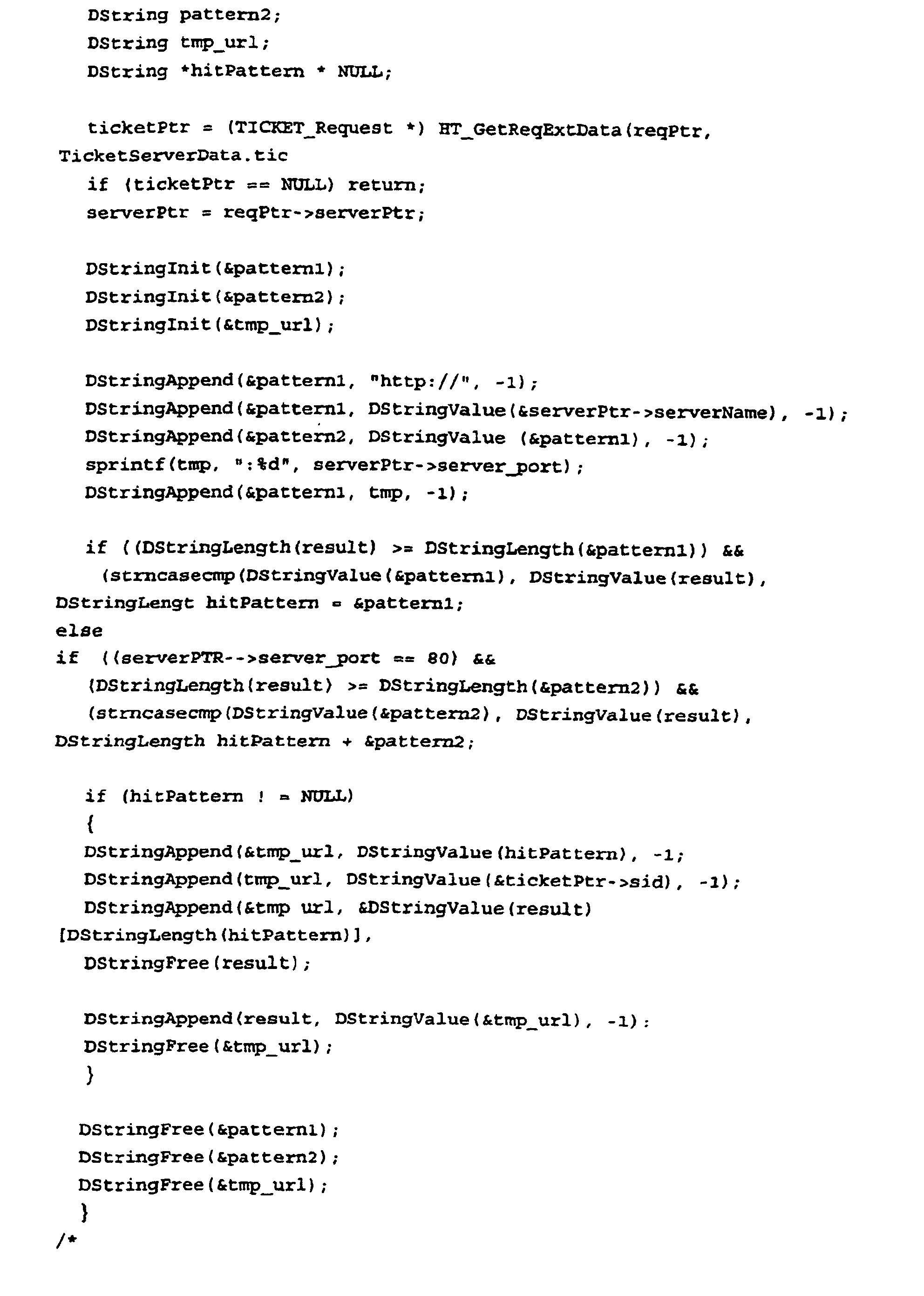

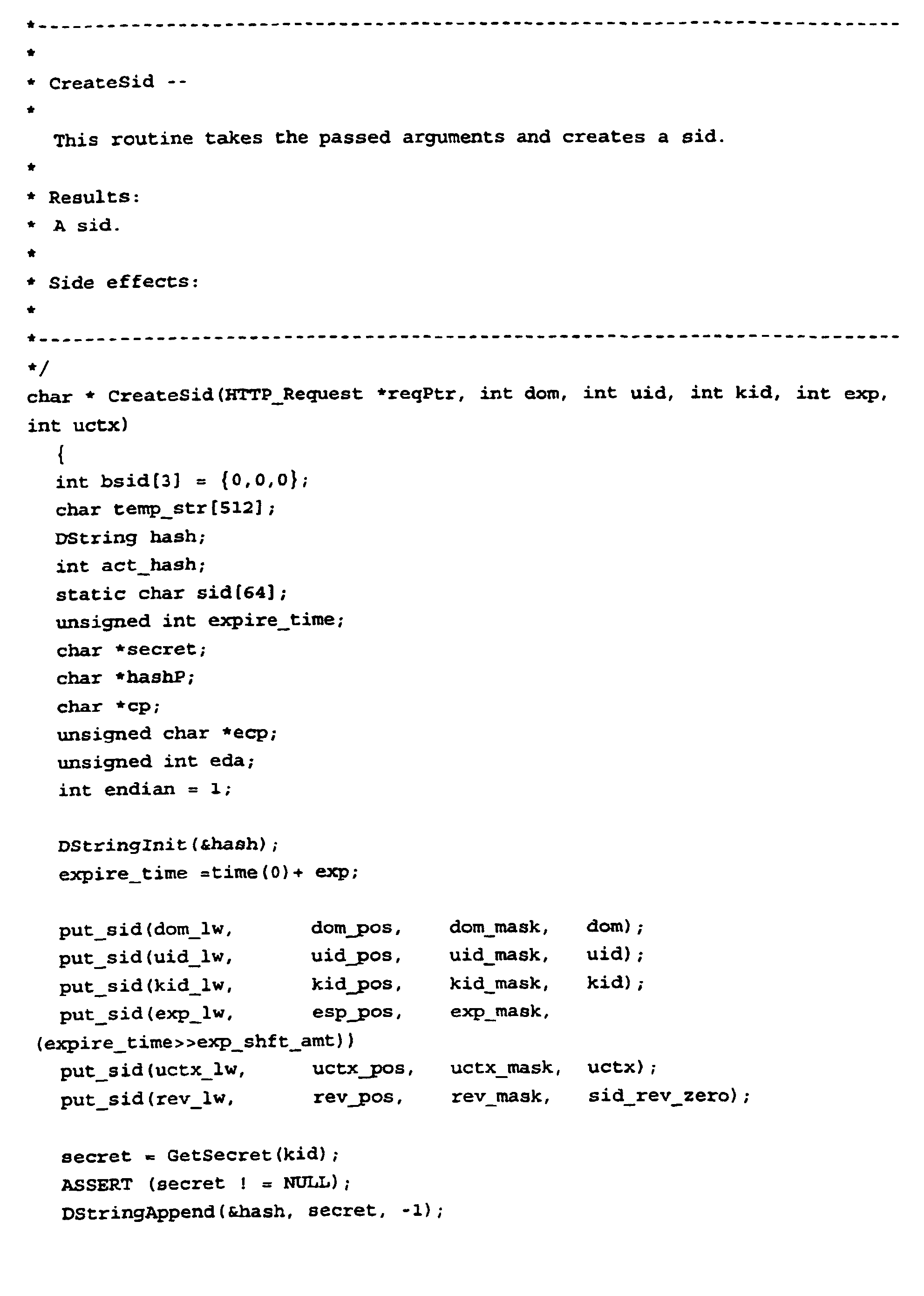

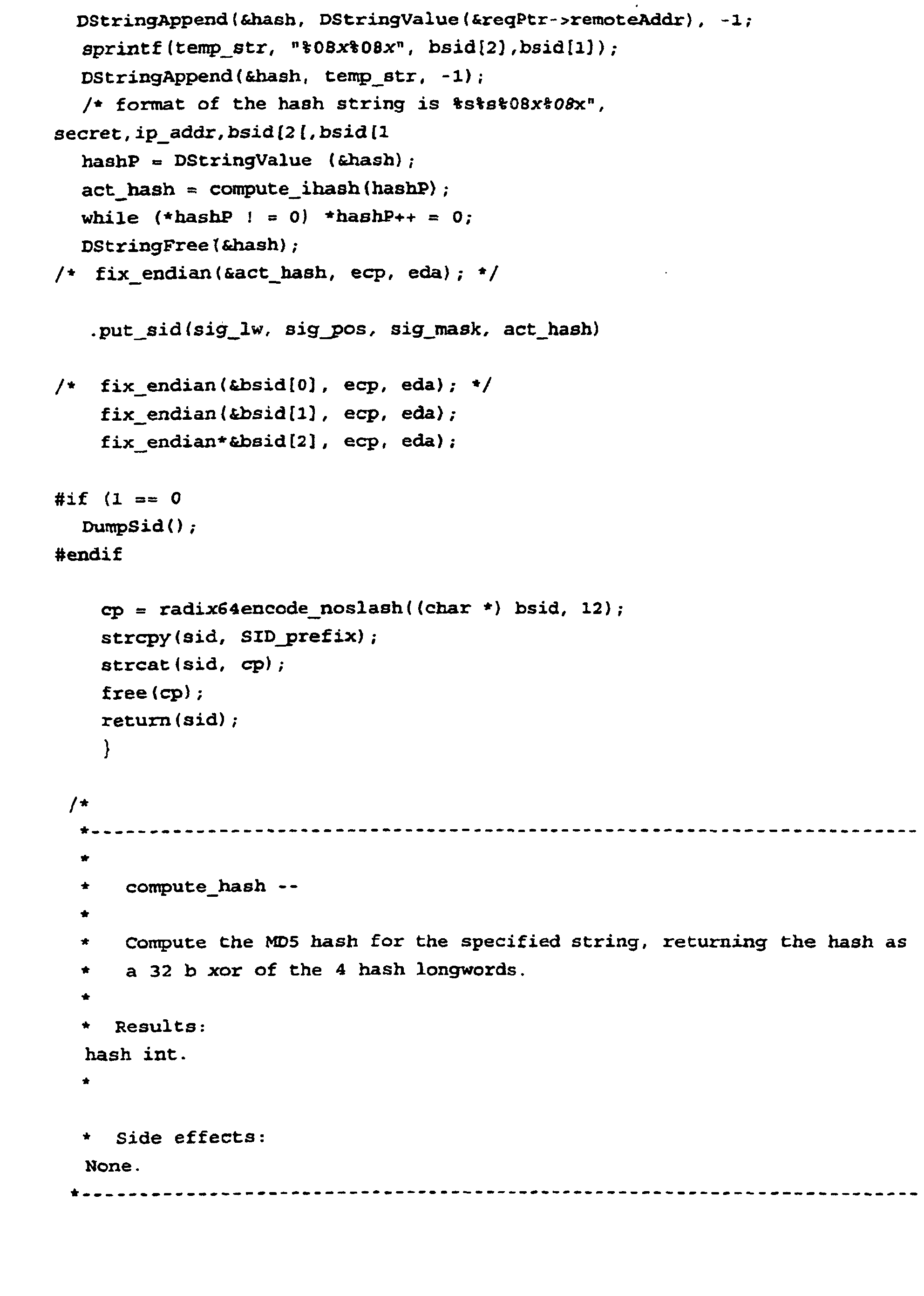

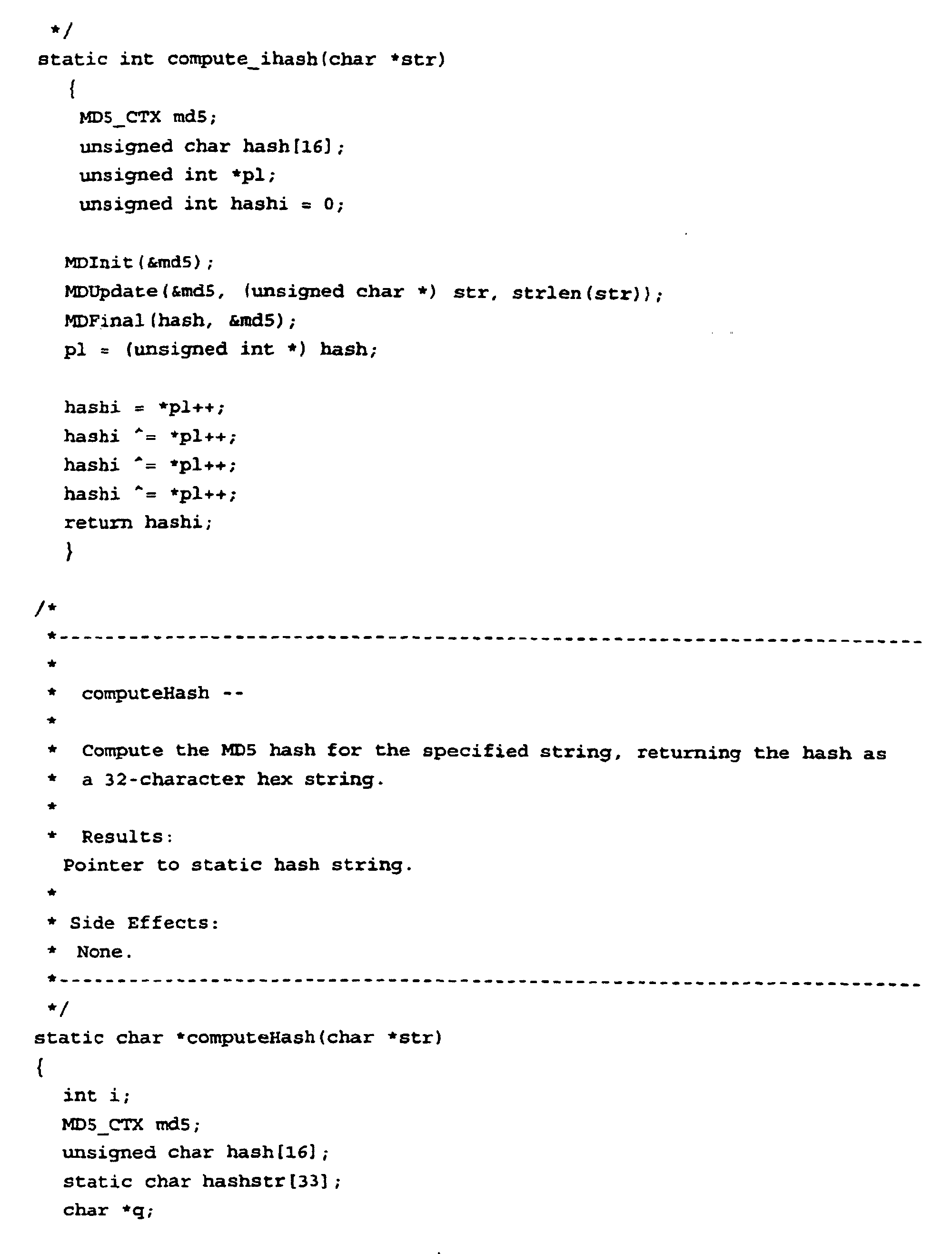

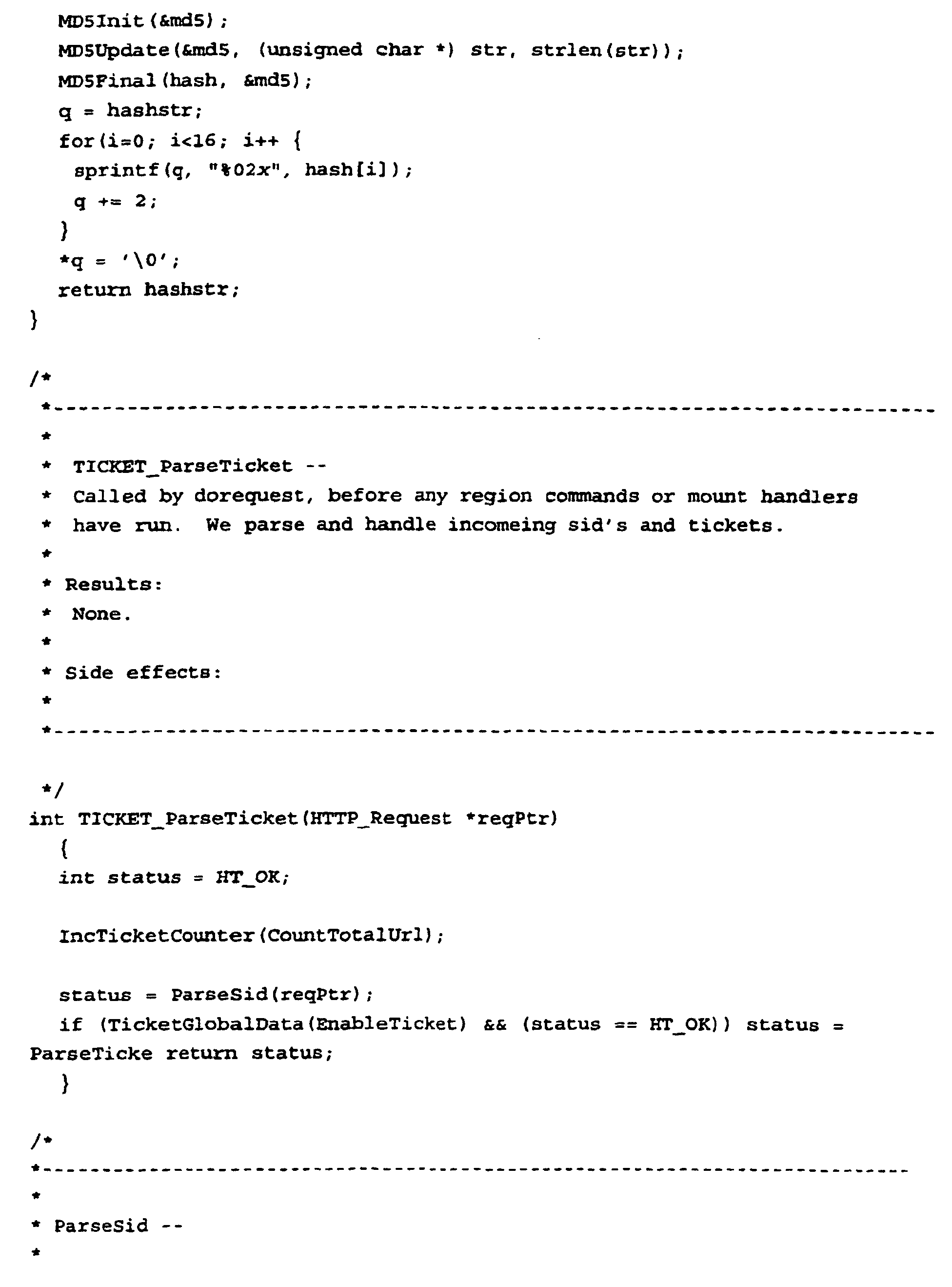

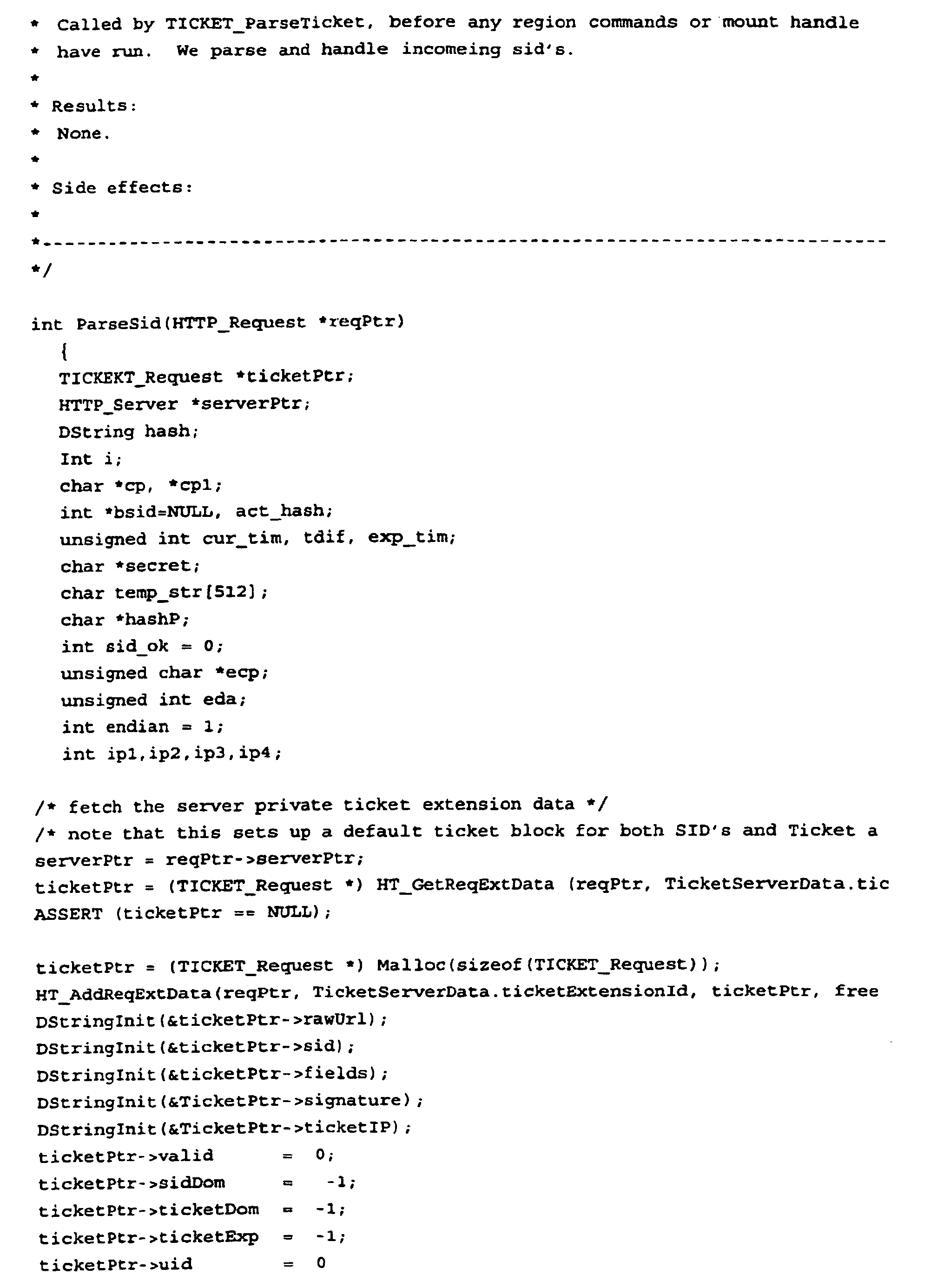

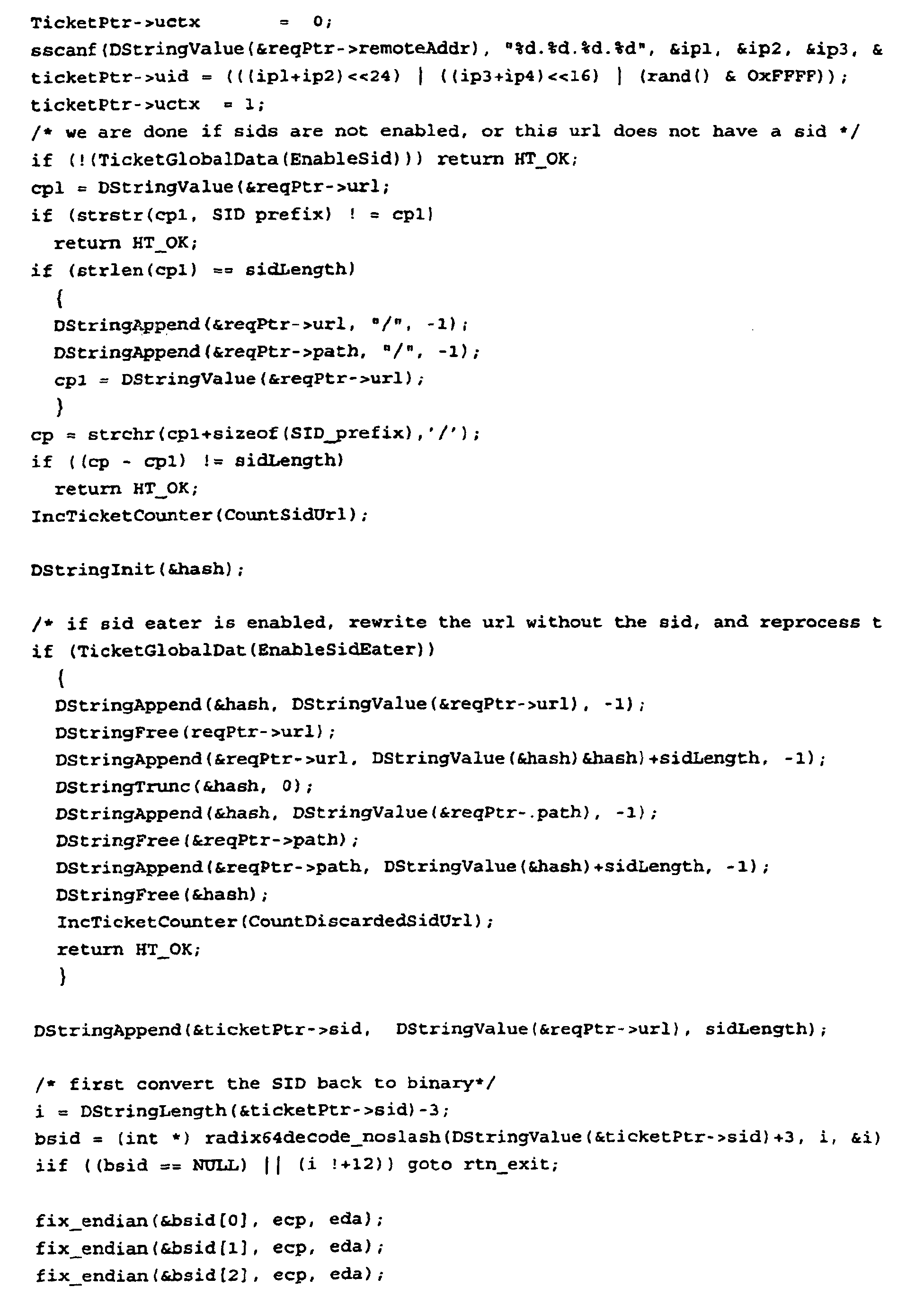

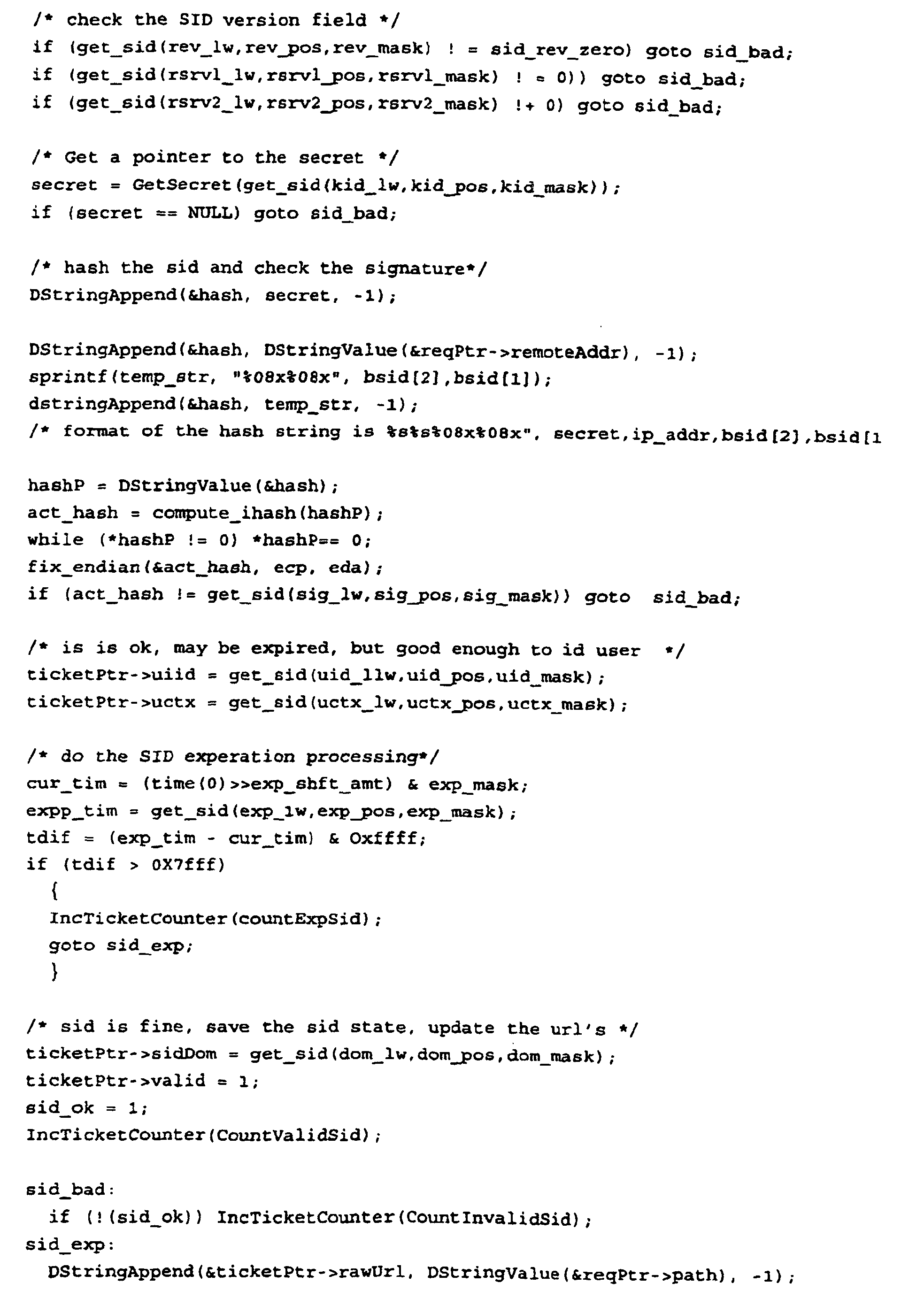

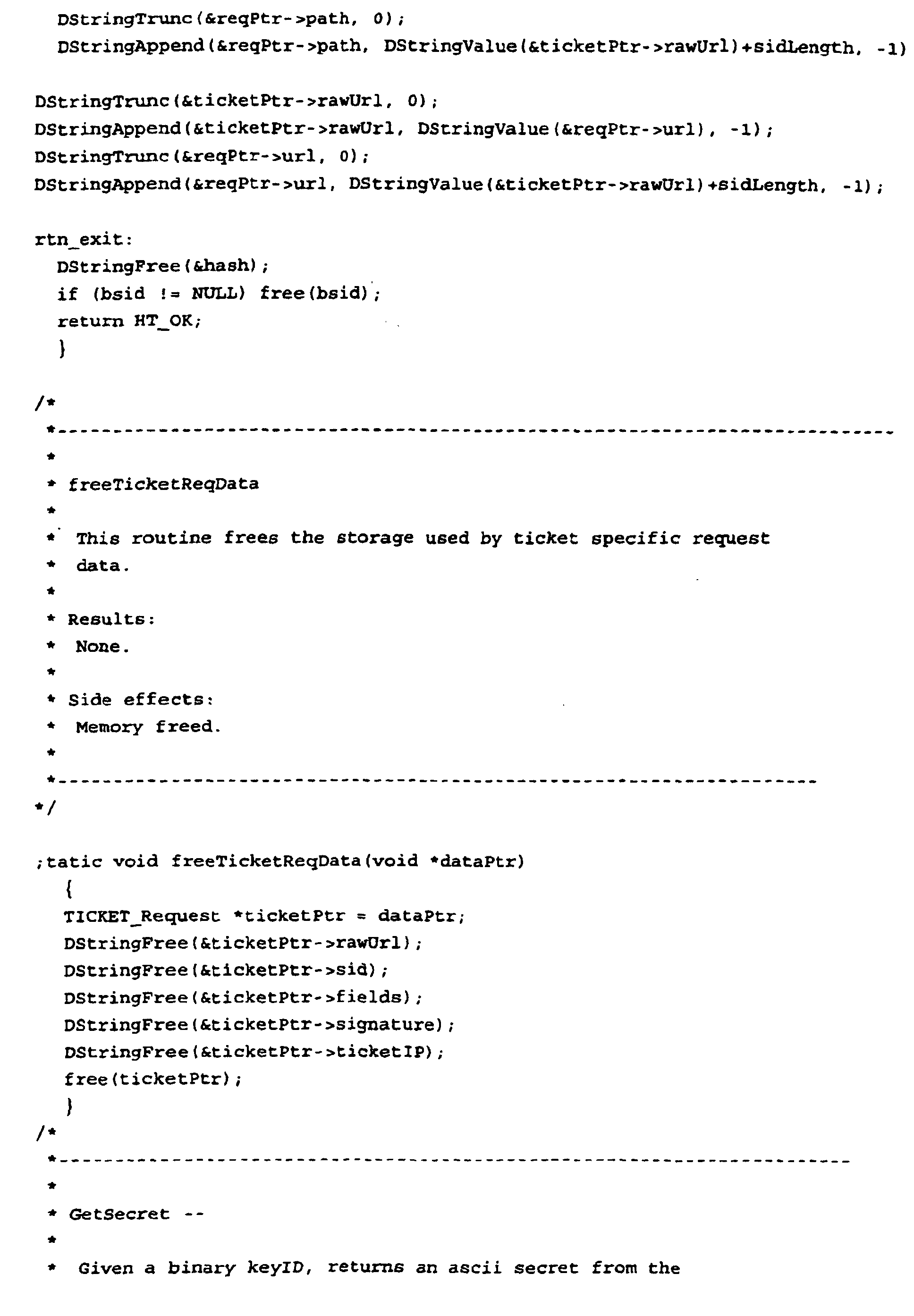

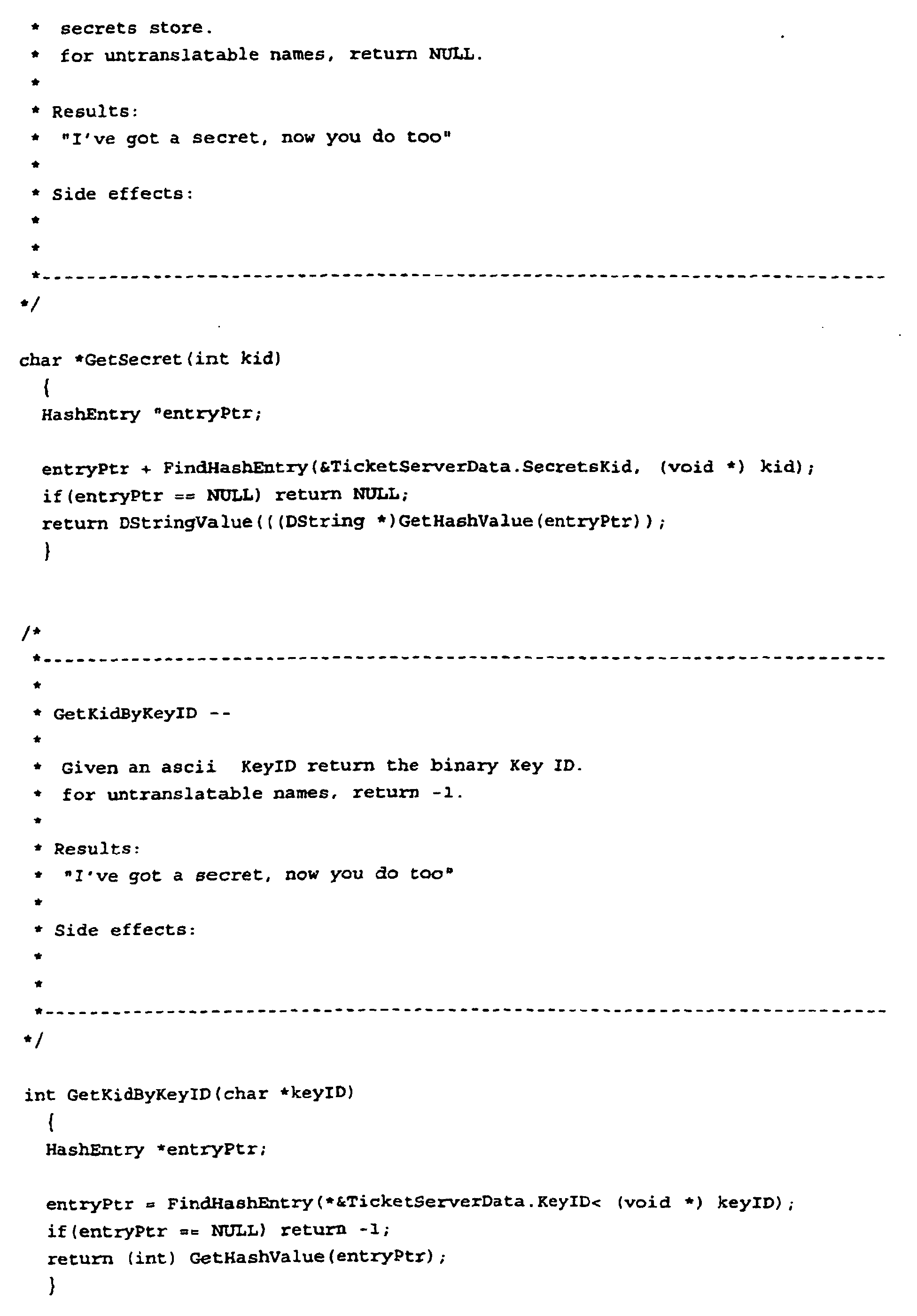

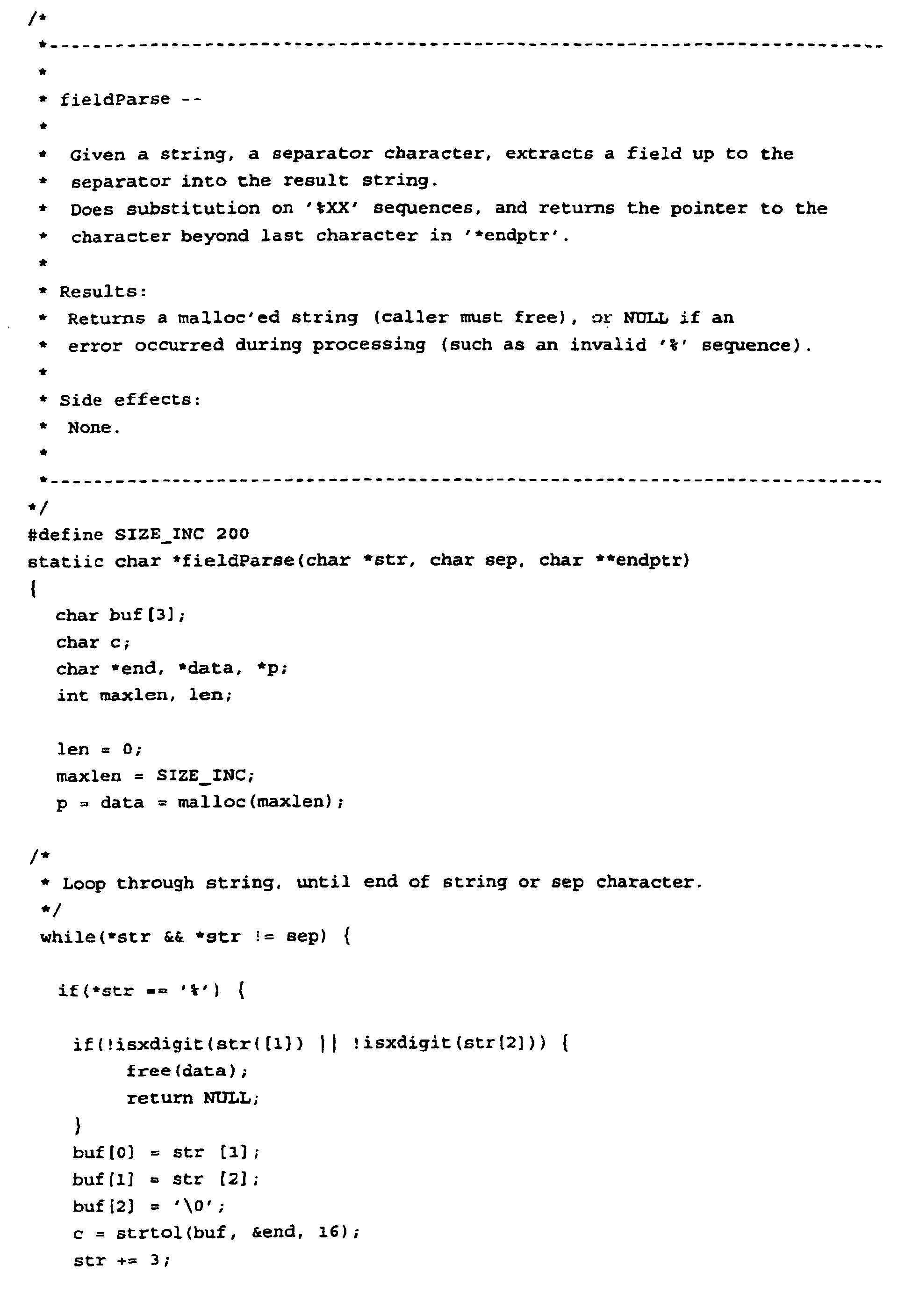

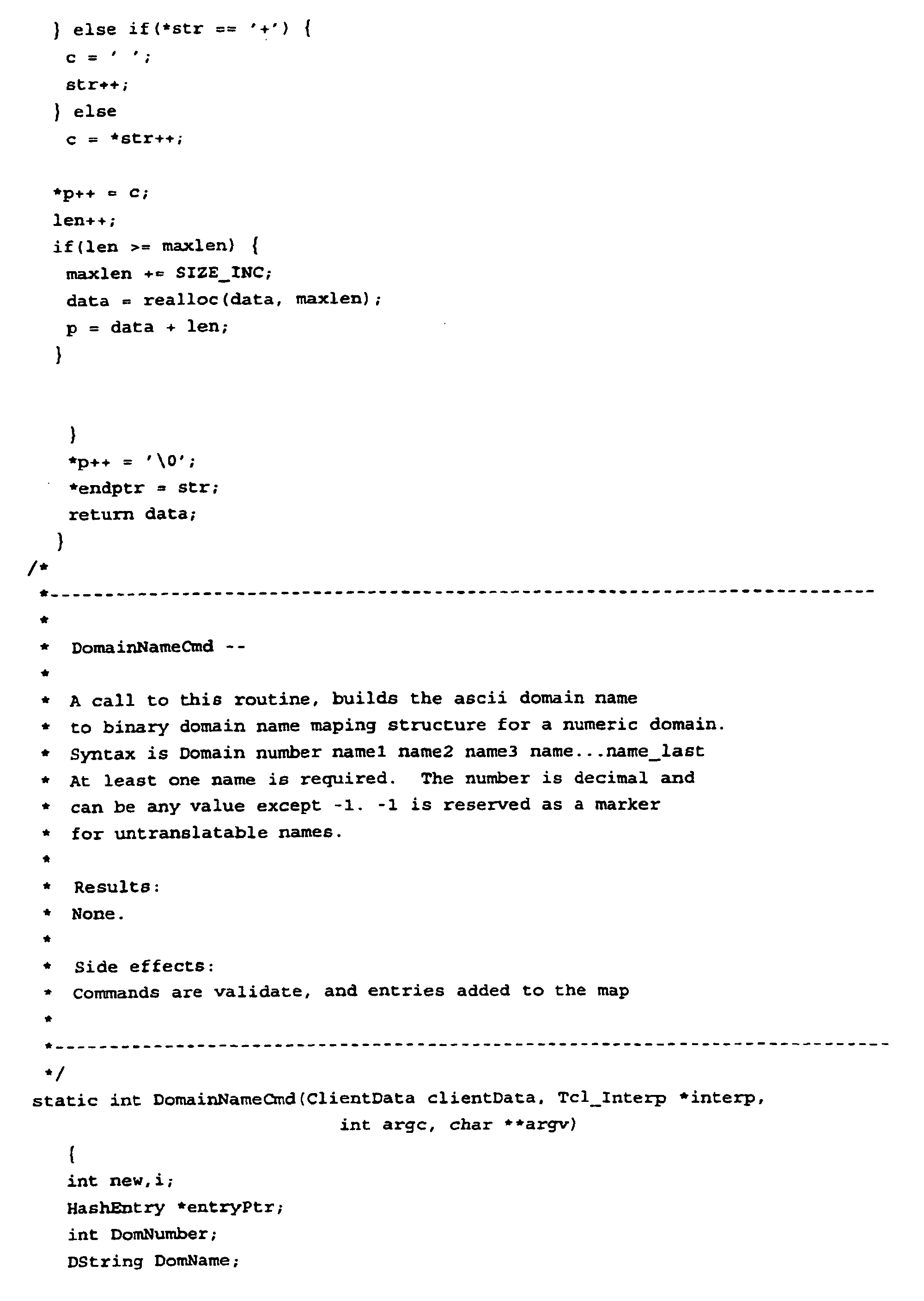

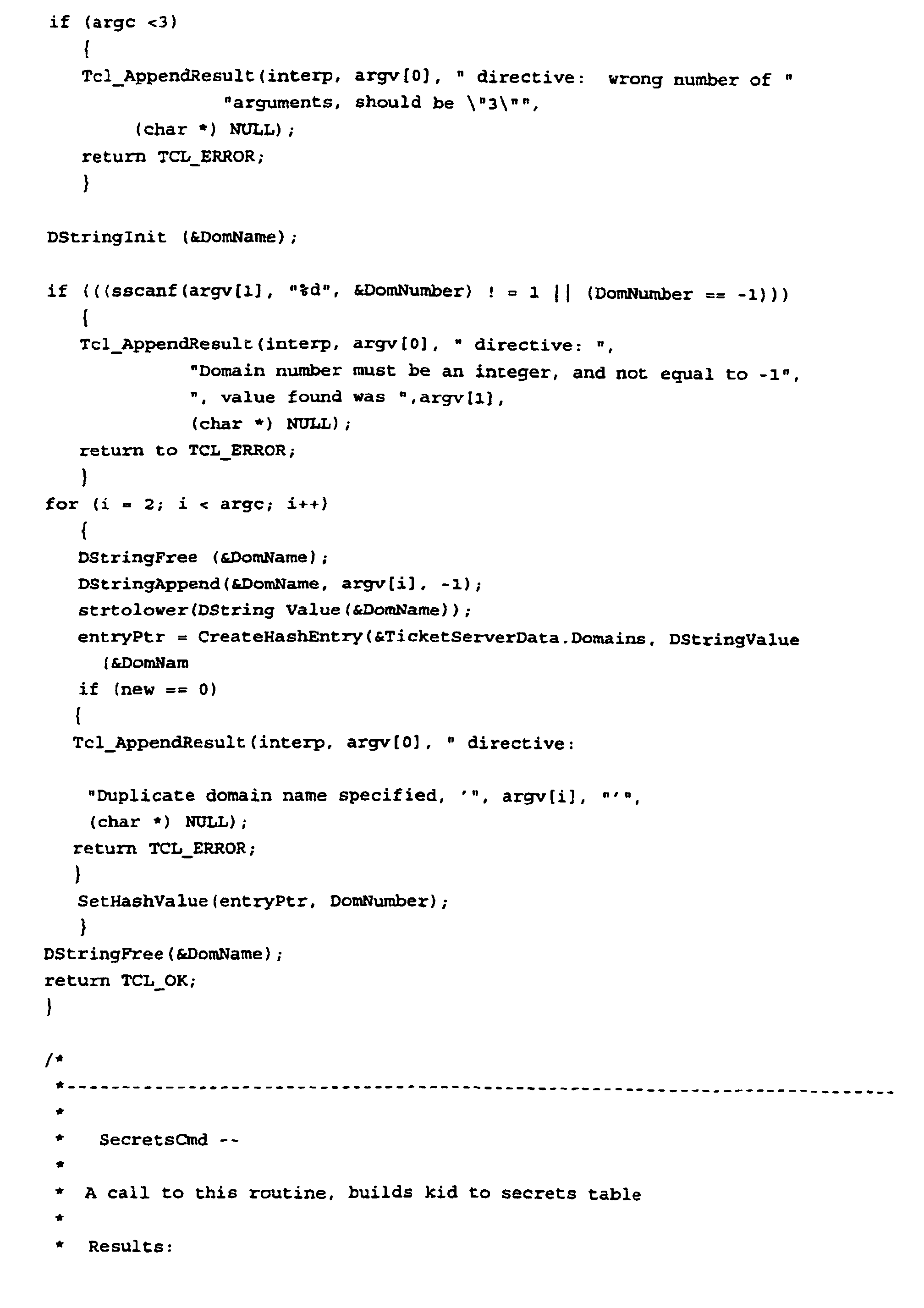

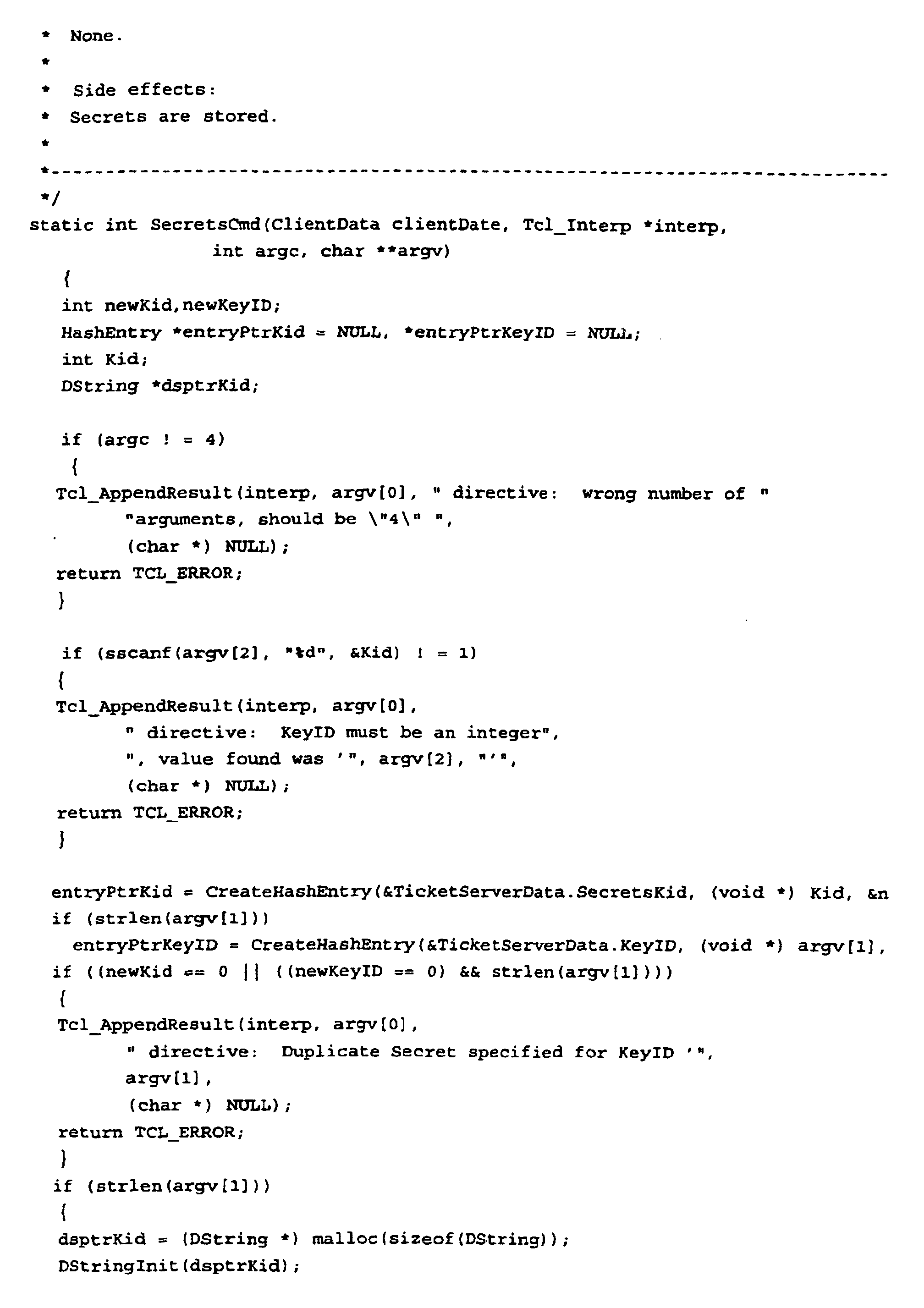

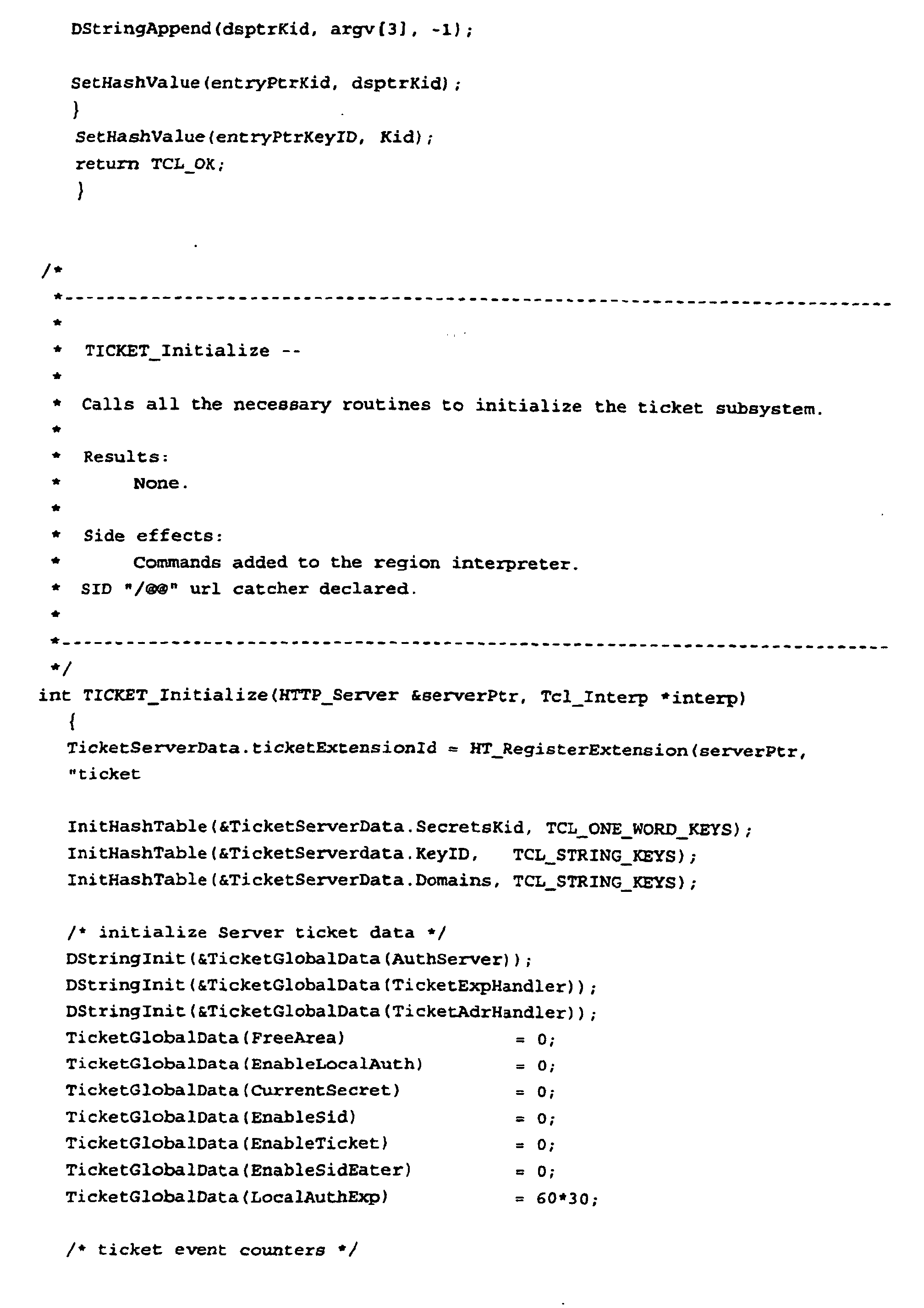

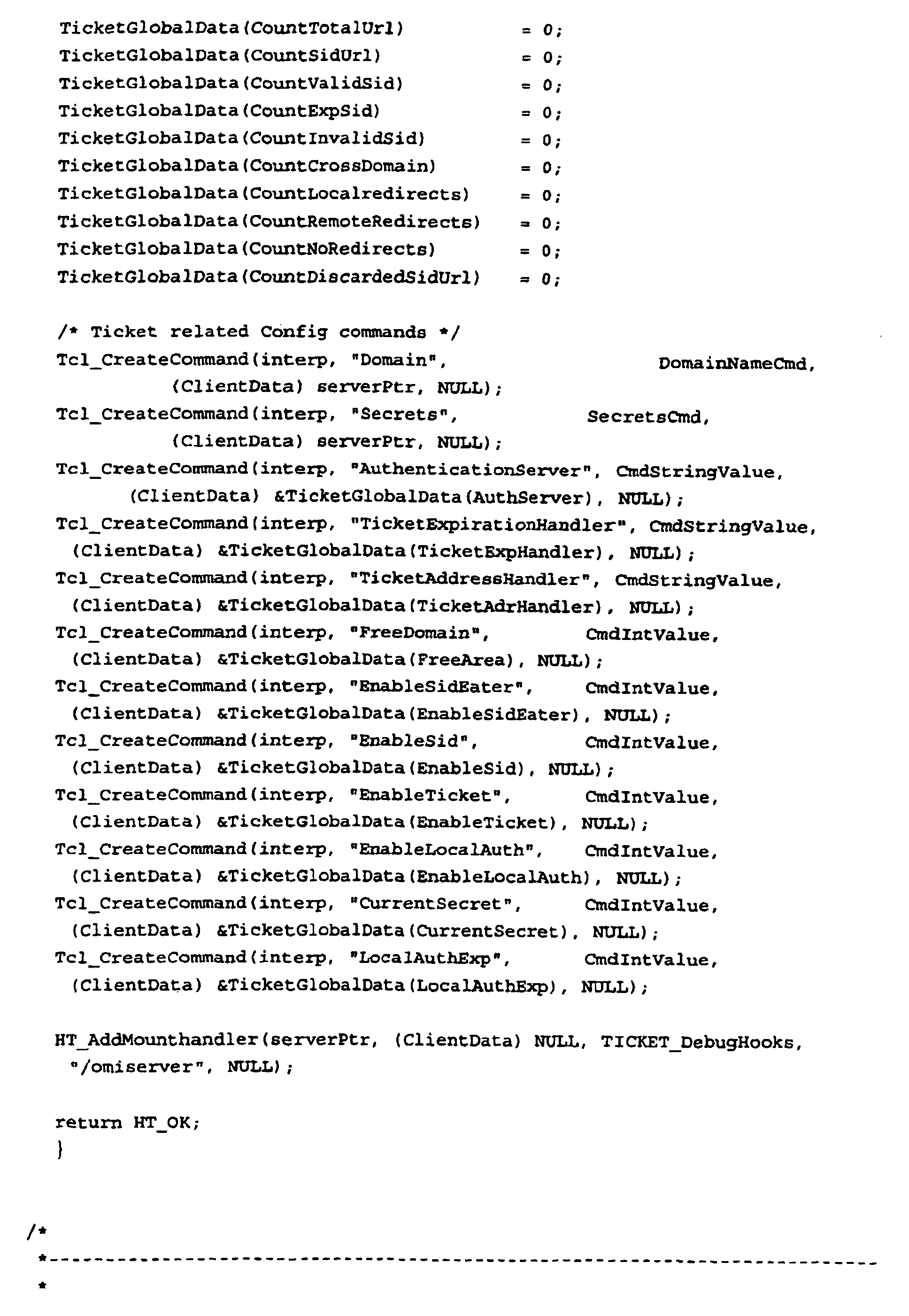

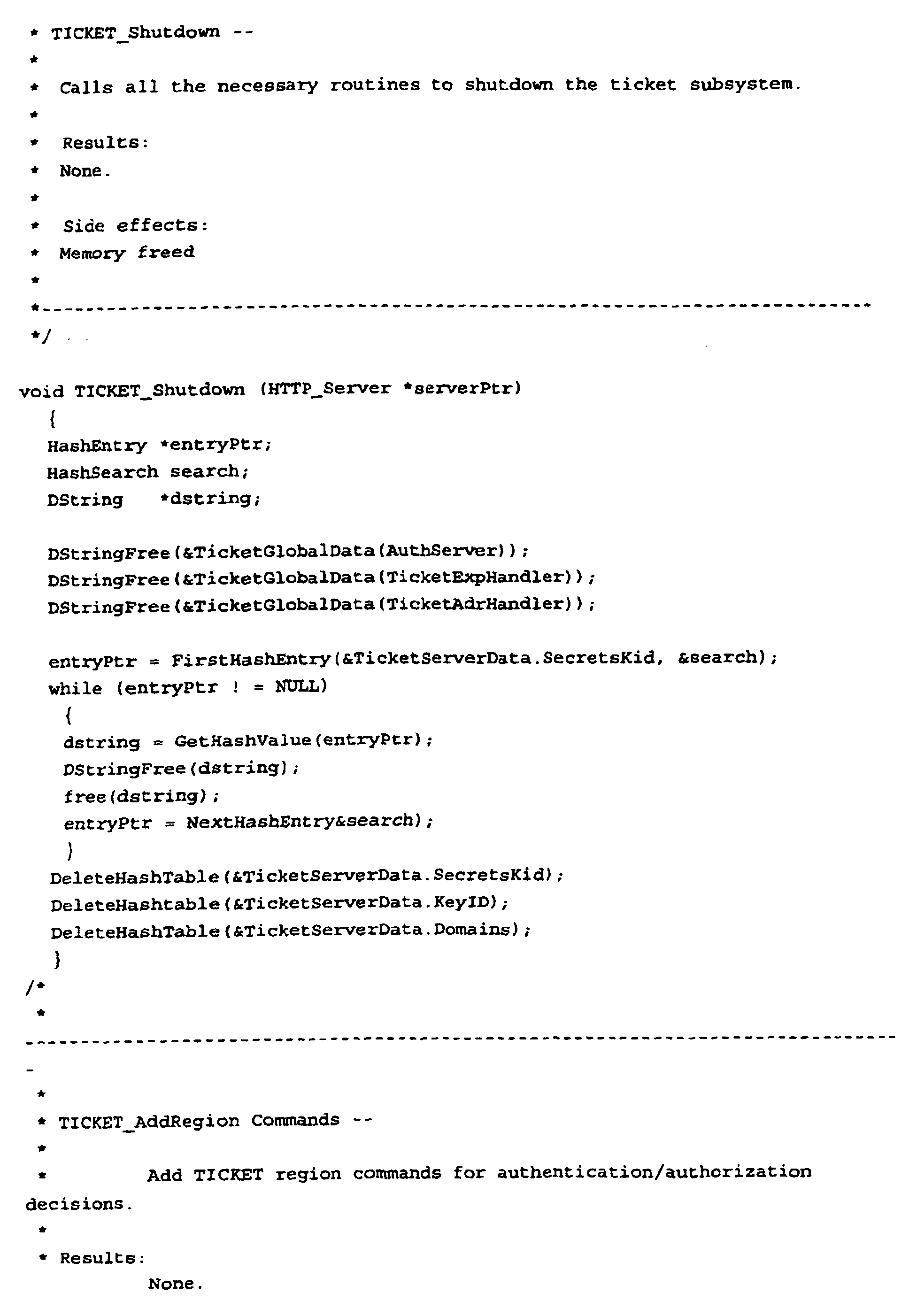

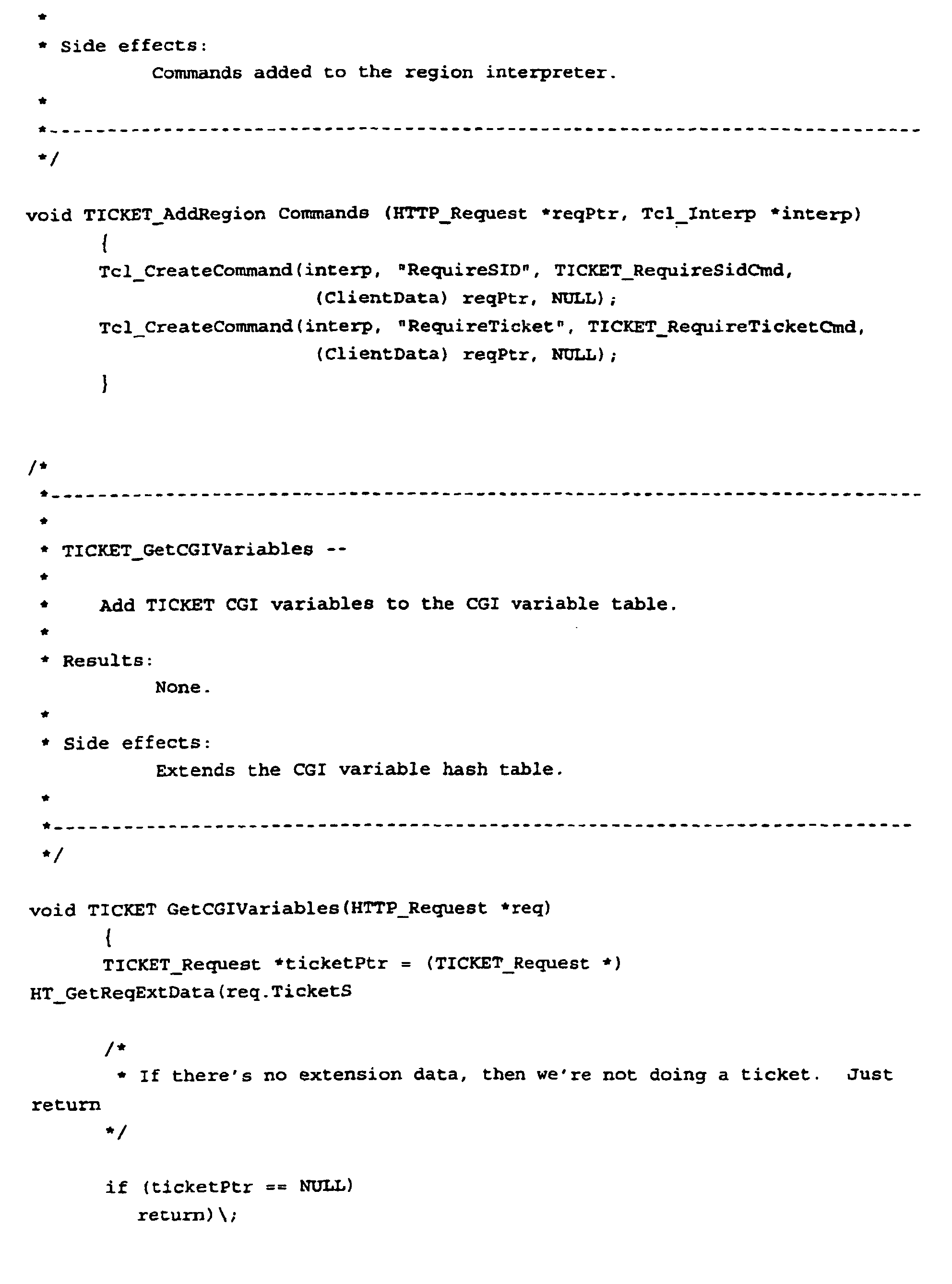

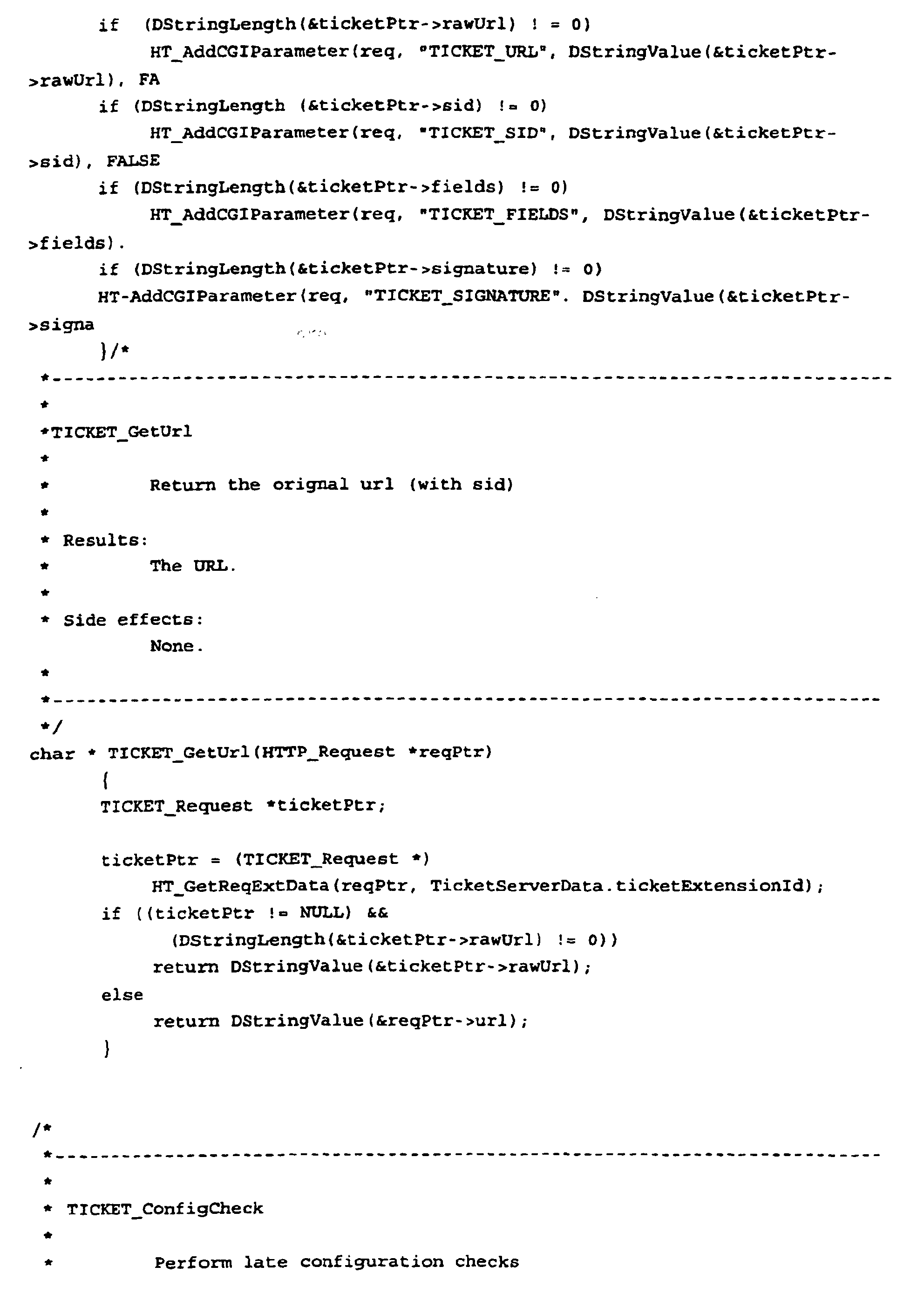

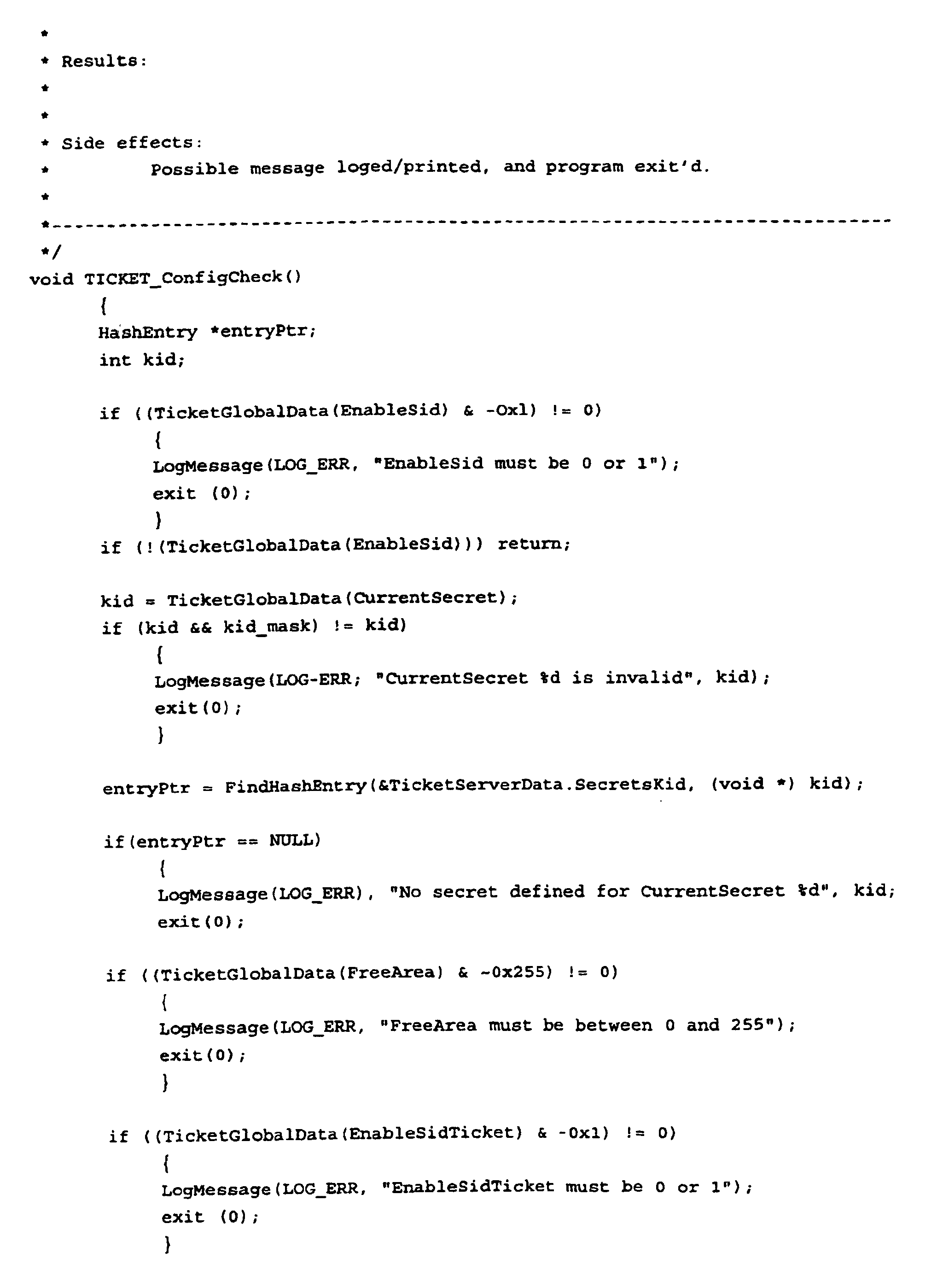

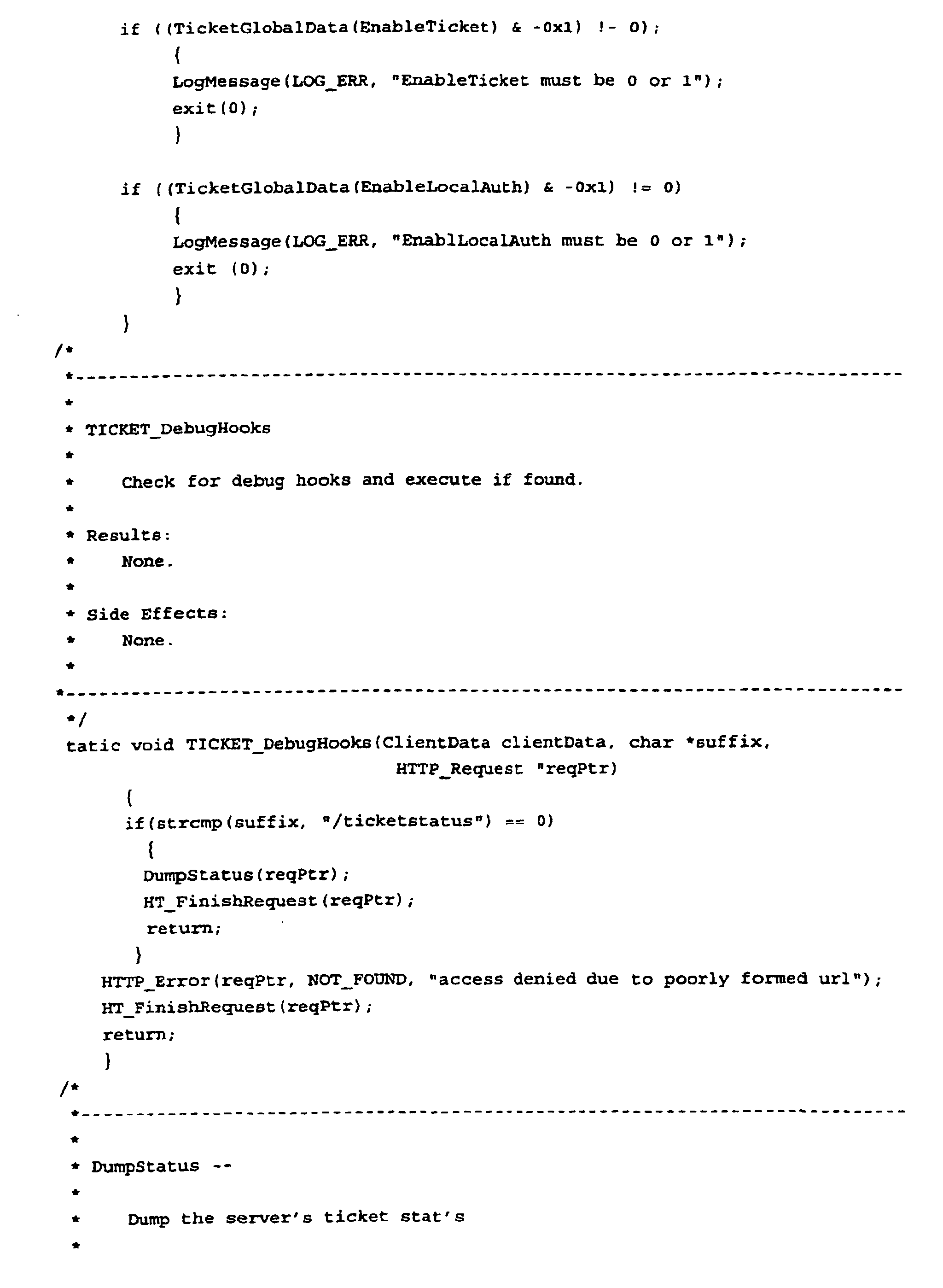

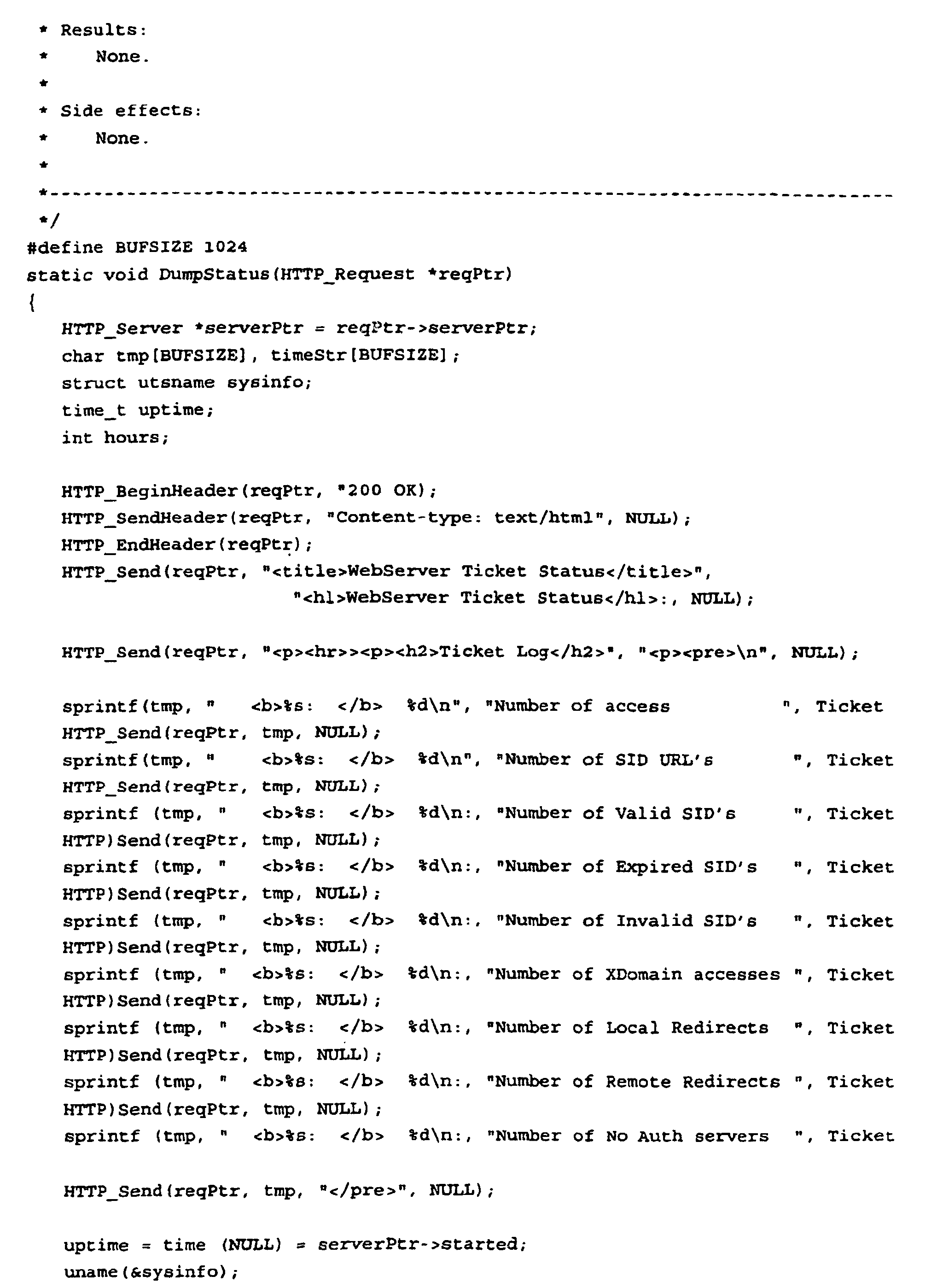

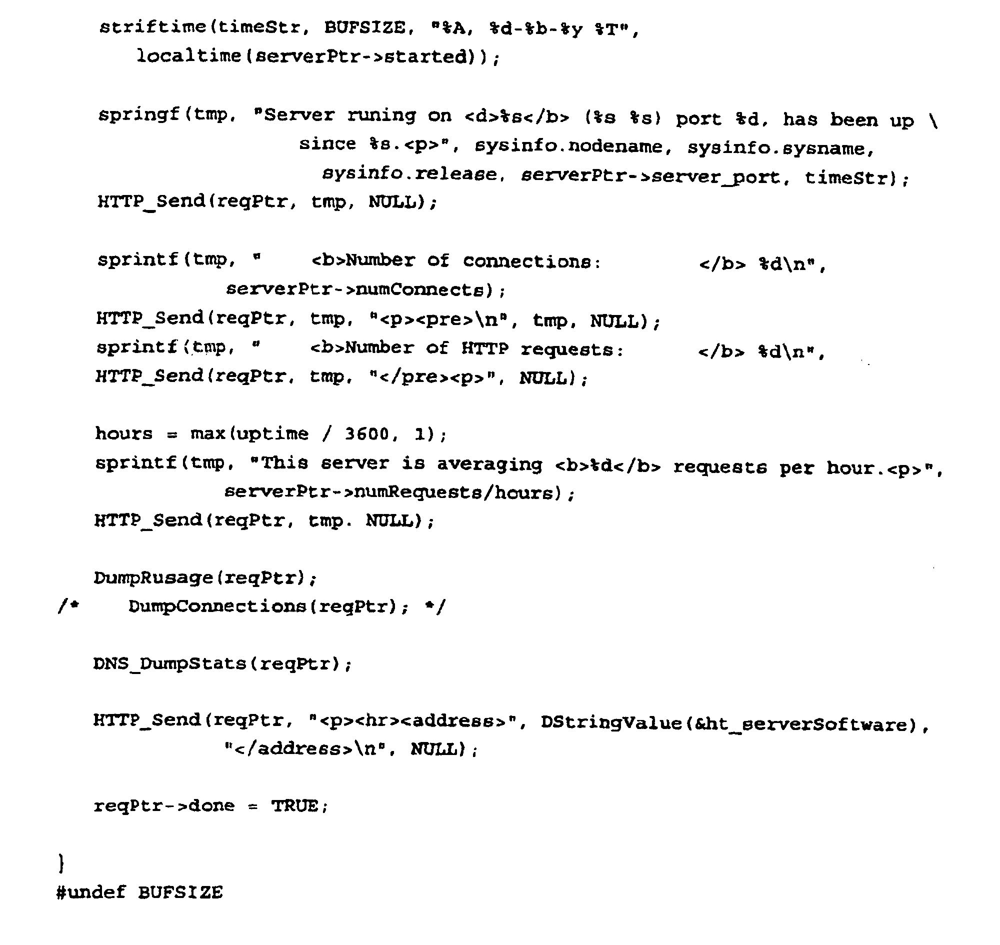

## Claims

1. A method of processing service requests from a client (100) to a server system (120) through a network comprising forwarding a service request from the client to the server system and processing the service request where the client has access rights to service, **characterized by**:
appending (230) a session identifier to the request and subsequent service requests from the client to the server system within a session of requests, the access rights of the client being fully contained within the session identifier.

2. A method as claimed in Claim 1, wherein the server system tracks an access history of sequences of service requests within the session of requests.

3. A method as claimed in Claim 2 wherein the server system tracks the access history to determine service requests leading to a purchase made within the session of requests.

4. A method as claimed in any of Claims 1, 2 or 3 wherein the server system counts requests to particular services exclusive of repeated requests from a common client.

5. A method as claimed in any of Claims 1 through 4 wherein the server system maintains a database relating customer information to access patterns, the information including customer demographics.

6. A method as claimed in any of Claims 1, or 2 through 5 wherein the server system subjects the client to an authorization routine prior to issuing the session identifier and the session identifier is protected from forgery.

7. A method as claimed in Claim 6 wherein the server system comprises plural servers including an authentication server which provides session identifiers for service requests to multiple servers.

8. A method as claimed in Claim 7 wherein:
a client (50) directs (1 or 3) a service request to a first server (52) which is to provide the requested service;
the first server checks the service request for a session identifier and only services (2) a service request having a valid session identifier, and where the service request has no valid identifier:
the first server (52) redirects (4,5) the service request from the client (50) to the authorization server (54);
the authorization server (54) subjects the client (50) to the authorization routine (6,7) and issues (8) the session identifier to be appended to the service request to the first server;
the client forwards (9) the service request appended with the session identifier to the first server; and
the first server recognizes the session identifier and services (10) the service request to the client; and
the client appends the session identifier to subsequent service requests to the server system and is serviced without further authorization.

9. A method as claimed in claim 8, wherein the session identifier is protected from forgery.

10. A method as claimed in any of Claims 1 through 9 wherein the session identifier includes a user identifier.

11. A method as claimed in any of Claims 1 through 10 wherein the session identifier includes an expiration time for the session.

12. A method as claimed in any of Claims 1 through 11 wherein the session identifier provides access to a protected domain to which the session has access authorization and wherein the session identifier is modified for access to a different protected domain.

13. A method as claimed in any.of Claims 1 through 12 wherein the session identifier provides a key identifier for key management.

14. A method as claimed in any of Claims 1 through 13 wherein communications between the client and server system are according to hypertext transfer protocol and the session identifier is appended as part of a path name in a uniform resource locator.

15. A method as claimed in Claim 14 wherein the client modifies the path name of a current uniform resource locator using relative addressing and retains the session identifier portion of the path name unmodified for successive requests in the session.

16. A method as claimed in any of Claims 1 through 15 wherein a service request is for a document and the session identifier includes a user identification, further comprising:
returning the requested document wherein the document is customized for a particular user based on the user identification of the session identifier.

17. A method as claimed in any of Claims 1 through 16. wherein a service request is for a document wherein the session identifier comprises a user identifier, and further comprising:
returning the requested document to the client;' and
charging the user identified in the identifier for access to the document.

18. A method of accessing information comprising the method as claimed in any of claims 1 through 17, and further comprising:
providing access to information pages from a client to a server through a network, comprising
providing a telephone number at the client,
mapping the telephone number to a target page identifier using a translation database,
requesting information described by the page identifier from the server system, and
displaying a page identified by the page identifier at the client.

19. A method of accessing information comprising the method as claimed in any of claims 1 through 16, and further comprising:
of providing access to information pages from a client to a server through a network, comprising
providing a descriptor at the client,
mapping the descriptor to a target page identifier using a translation database,
requesting at the client information described by the page identifier from the server system without further user action, and
displaying a page identified by the page identifier at the client.

20. A method as claimed in Claim 19 wherein the descriptor comprises a telephone number.

21. A method as claimed in Claims 18, 19 or 20 wherein the translation database resides in the server system which returns a uniform resource locator in a REDIRECT command to the client to cause the client to request the information using the uniform resource locator.

22. A method as claimed in Claims 19, 20 or 21 wherein the descriptor comprises a descriptive term.

23. A method as claimed in Claim 22 wherein the term includes a company name.

24. A method as claimed in Claim 22 or 23 wherein the term includes a product name.

25. A method as claimed in Claim 22, 23 or 24 wherein the term is identified by phonetic mapping.

26. A method as claimed in any of Claims 18 through 25 wherein the target page identifier is a uniform resource locator.

27. An information system on a network, comprising:
means for receiving service requests from clients and for determining whether a service request'includes a session identifier, the access rights of the client being fully contained within the session identifier, wherein communications between the client and server system are according to hypertext transfer protocol;
means for appending the session identifier as part of a path name in a uniform resource locator in response to an initial service request in a session of requests; and
means for servicing service requests from a client which include the session identifier, the subsequent service request being processed in the session.

## Patentansprüche

1. Verfahren zum Verarbeiten von Serviceanforderungen von einem Client (100) an ein Serversystem (120) über ein Netzwerk, welches das Weiterleiten einer Serviceanforderung von dem Client zu dem Serversystem und das Verarbeiten der Serviceanforderung umfasst, wobei der Client Zugriffsrechte zu dem Service hat, **gekennzeichnet durch**:
Anhängen (230) eines Session-Kennzeichens an die Anforderung und nachfolgende Serviceanforderungen von dem Client an das Serversystem in einer Session von Anforderungen, wobei Zugriffsrechte des Clients vollständig in dem Session-Kennzeichen enthalten sind.

2. Verfahren nach Anspruch 1, bei dem das Serversystem eine Zugangshistorie der Sequenzen der Serviceanforderungen innerhalb der Session von Anforderungen verfolgt.

3. Verfahren nach Anspruch 2, bei dem das Serversystem die Zugangshistorie verfolgt, um eine Serviceanforderung zu bestimmen, die zu einem innerhalb der Session von Anforderungen gemachten Kauf führt.

4. Verfahren nach einem der Ansprüche 1, 2 oder 3, bei dem das Serversystem Anforderungen an bestimmte Services, ausgenommen wiederholte Anforderungen von einem Common-Client, zählt.

5. Verfahren nach einem der Ansprüche 1 bis 4, bei dem das Serversystem eine Datenbank pflegt, welche Benutzerinformationen mit Zugangsmustern verbindet, wobei die Informationen eine Benutzerdemographie enthalten.

6. Verfahren nach einem der Ansprüche 1 oder 2 bis 5, bei dem das Serversystem den Client vor dem Ausstellen eines Session-Kennzeichens einer Autorisationsroutine unterzieht und das Session-Kennzeichen gegen Fälschung geschützt ist.

7. Verfahren nach Anspruch 6, bei dem das Serversystem eine Vielzahl von Servern einschließlich einem Authentisierungsserver aufweist, welcher mehrere Server mit Session-Kennzeichen für Serviceanforderungen versorgt.

8. Verfahren nach Anspruch 7, wobei
ein Client (50) eine Serviceanforderung an einen ersten Server (52) richtet (1 oder 3), welcher den angeforderten Service bereitstellt;
der erste Server die Serviceanforderung auf ein Session-Kennzeichen überprüft und nur eine Serviceanforderung mit einem gültigen Session-Kennzeichen bedient, und wenn die Serviceanforderung kein gültiges Kennzeichen hat:
der erste Server (52) die Serviceanforderung von dem Client (50) zu dem Autorisationsserver (54) umleitet;
der Autorisierungsserver (54) den Client (50) einer Autorisationsroutine (6, 7) unterzieht und das Session-Kennzeichen ausgibt (8), um an die Serviceanforderung zu dem ersten Server angehängt zu werden;
der Client die Serviceanforderung mit dem angehängten Session-Kennzeichen an den ersten Server weiterleitet (9); und
der erste Server das Session-Kennzeichen erkennt und die Serviceanforderung an den Client bedient (10); und
der Client das Session-Kennzeichen an nachfolgende Serviceanforderungen an das Serversystem anhängt und ohne weitere Autorisation bedient wird.

9. Verfahren nach Anspruch 8, bei dem das Session-Kennzeichen gegen Fälschung geschützt ist.

10. Verfahren nach einem der Ansprüche 1 bis 9, bei dem das Session-Kennzeichen ein Benutzerkennzeichen enthält.

11. Verfahren nach einem der Ansprüche 1 bis 10, bei dem das Session-Kennzeichen eine Verfallszeit für die Session enthält.

12. Verfahren nach einem der Ansprüche 1 bis 11, bei dem das Session-Kennzeichen Zugang zu einer geschützten Domain vorsieht, zu der die Session die Zugangsautorisation hat, und bei dem das Session-Kennzeichen für den Zugang zu einer anderen geschützten Domain verändert wird.

13. Verfahren nach einem der Ansprüche 1 bis 12, bei dem das Session-Kennzeichen ein Schlüsselkennzeichen für ein Schlüsselmanagement vorsieht.

14. Verfahren nach einem der Ansprüche 1 bis 13, bei dem Kommunikationen zwischen dem Client und dem Serversystem entsprechend dem Hypertext-Transfer-Protokoll stattfinden und das Session-Kennzeichen als Teil eines Pfadnamens in einem Uniform Resource Locator angehängt ist.

15. Verfahren nach Anspruch 14, bei dem der Client den Pfadnamen eines aktuellen Uniform Resource Locators durch Anwendung relativer Adressierung verändert und den Abschnitt des Pfadnamens mit dem Session-Kennzeichen für nachfolgende Anforderungen in der Session unverändert lässt.

16. Verfahren nach einem der Ansprüche 1 bis 15, bei dem eine Serviceanforderung für ein Dokument ist und das Session-Kennzeichen eine Benutzeridentifikation aufweist, ferner umfassend:
Zurücksenden des angeforderten Dokuments, wobei das Dokument auf Basis der Benutzeridentifikation des Session-Kennzeichens für einen speziellen Benutzer hergerichtet ist.

17. Verfahren nach einem der Ansprüche 1 bis 16, bei dem eine Serviceanforderung für ein Dokument ist, wobei das Session-Kennzeichen ein Benutzerkennzeichen umfasst, ferner umfassend:
Zurücksenden des Dokuments zu dem Client; und
in Rechnung stellen des Zugangs zu dem Dokument bei dem durch das Kennzeichen identifizierten Benutzer.

18. Verfahren zum Zugreifen auf Informationen mit dem in einem der Ansprüche 1 bis 17 beanspruchten Verfahren, ferner umfassend:
Vorsehen eines Zugangs zu Informationsseiten von einem Client zu einem Server über ein Netzwerk, umfassend
Vorsehen einer Telefonnummer bei dem Client,
Eintragen der Telefonnummer in einem Zielseitenkennzeichen unter Verwendung einer Translationsdatenbank,
Anfordern von durch das Seitenkennzeichen beschriebenen Informationen von dem Serversystem, und
Anzeigen einer durch das Seitenkennzeichen identifizierten Seite bei dem Client.

19. Verfahren zum Zugreifen auf Informationen mit dem in einem der Ansprüche 1 bis 16 beanspruchten Verfahren, ferner umfassend;
Vorsehen eines Zugangs zu Informationsseiten von einem Client zu einem Server über ein Netzwerk, umfassend
Vorsehen eines Descriptors bei dem Client,
Eintragen des Descriptors in einem Zielseitenkennzeichen unter Verwendung einer Translationsdatenbank,
Anfordern von durch das Seitenkennzeichen beschriebenen Informationen bei dem Client von dem Serversystem ohne weitere Benutzerhandlungen, und
Darstellen einer durch das Seitenkennzeichen identifizierten Seite bei dem Client.

20. Verfahren nach Anspruch 19, bei dem der Descriptor eine Telefonnummer umfasst.

21. Verfahren nach einem der Ansprüche 18, 19 oder 20, bei dem die Translationsdatenbank in dem Serversystem untergebracht ist, welches einen Uniform Resource Locator in einem Umleitbefehl zu dem Client zurückgibt, um den Client zu veranlassen, die Informationen unter Verwendung des Uniform Resource Locators anzufordern.

22. Verfahren nach einem der Ansprüche 19, 20 oder 21, bei dem der Descriptor einen beschreibenden Ausdruck umfasst.

23. Verfahren nach Anspruch 22, bei dem der Ausdruck einen Firmennamen beinhaltet.

24. Verfahren nach Anspruch 22 oder 23, bei dem der Ausdruck einen Produktnamen beinhaltet.

25. Verfahren nach einem der Ansprüche 22, 23 oder 24, bei dem der Ausdruck durch phonetisches Abbilden identifiziert ist.

26. Verfahren nach einem der Ansprüche 18 bis 25, bei dem das Zielseitenkennzeichen ein Uniform Resource Locator ist.

27. Informationssystem in einem Netzwerk, umfassend:
Mittel zum Empfangen von Serviceanforderungen von Clients und zum Bestimmen, ob eine Serviceanforderung ein Session-Kennzeichen beinhaltet, wobei die Zugriffsrechte des Clients vollständig in dem Session-Kennzeichen enthalten sind, und wobei Kommunikationen zwischen dem Client und dem Serversystem entsprechend dem Hypertext-Transfer-Protokoll stattfinden;
Mittel zum Anhängen des Session-Kennzeichens als Teil des Pfadnamens in einem Uniform Resource Locator in Antwort auf eine Eingangs-Serviceanforderung in einer Session von Anforderungen; und
Mittel zum Bedienen von Serviceanforderungen von einem Client, welche das Session-Kennzeichen beinhalten, wobei die nachfolgende Serviceanforderung in der Session bearbeitet wird.

## Revendications

1. Méthode de traitement des demandes de service provenant d'un client (100) vers un système serveur (120) par l'intermédiaire d'un réseau comprenant le transfert d'une demande de service depuis le client vers le système serveur et le traitement de la demande de service si le client dispose de droits d'accès au service, **caractérisé par** :
ajouter (230) un identifiant de session à la demande et aux demandes de service suivantes provenant du client vers le système serveur dans une session de demandes, les droits d'accès du client étant entièrement contenus dans l'identifiant de session.

2. Méthode selon la revendication 1, dans laquelle le système serveur conserve un historique des accès pour les séquences de demandes de service dans la session de demandes.

3. Méthode selon la revendication 2, dans laquelle le système serveur conserve l'historique des accès pour déterminer les demandes de service entraînant un achat réalisé dans la session de demandes.

4. Méthode selon l'une quelconque des revendications 1, 2 ou 3, dans laquelle le système serveur compte les demandes de services spécifiques à l'exclusion des demandes répétées provenant d'un client commun.

5. Méthode selon l'une quelconque des revendications 1 à 4, dans laquelle le système serveur conserve une base de données établissant une correspondance entre les informations concernant les clients et les modèles d'accès, les informations comprenant les données démographiques des clients.

6. Méthode selon l'une quelconque des revendications 1, ou 2 à 5, dans laquelle le système serveur soumet le client à une routine d'autorisation avant de délivrer l'identifiant de session et dans laquelle l'identifiant de session est protégé contre les falsifications.

7. Méthode selon la revendication 6, dans laquelle le système serveur comprend plusieurs serveurs comprenant un serveur d'authentification qui délivre des identifiants de session pour les demandes de service vers plusieurs serveurs.

8. Méthode selon la revendication 7, dans laquelle :
un client (50) dirige (1 ou 3) une demande de service vers un premier serveur (52) qui doit fournir le service demandé ;
le premier serveur recherche dans la demande de service un identifiant de session et satisfait uniquement (2) les demandes de service possédant un identifiant de session valide, et si la demande de service ne comprend pas d'identifiant valide :
le premier serveur (52) redirige (4, 5) la demande de service provenant du client (50) vers le serveur d'autorisation (54) ;
le serveur d'autorisation (54) soumet le client (50) à la routine d'autorisation (6, 7) et délivre (8) l'identifiant de session à ajouter à la demande de service destinée au premier serveur ;
le client transfère (9) la demande de service complétée de l'identifiant de session au premier serveur ; et
le premier serveur reconnaît l'identifiant de session et satisfait (10) la demande de service du client ; et
le client ajoute l'identifiant de session aux demandes de service suivantes destinées au système serveur et reçoit le service demandé sans être soumis à une autorisation supplémentaire.

9. Méthode selon la revendication 8, dans laquelle l'identifiant de session est protégé contre les falsifications.

10. Méthode selon l'une quelconque des revendications 1 à 9, dans laquelle l'identifiant de session comprend un identifiant utilisateur.

11. Méthode selon l'une quelconque des revendications 1 à 10, dans laquelle l'identifiant de session comprend une heure d'expiration pour la session.

12. Méthode selon l'une quelconque des revendications 1 à 11, dans laquelle l'identifiant de session fournit un accès à un domaine protégé pour lequel la session dispose d'une autorisation d'accès et dans laquelle l'identifiant de session est modifié pour accéder à un domaine protégé différent.

13. Méthode selon l'une quelconque des revendications 1 à 12, dans laquelle l'identifiant de session fournit un identifiant de clé pour une gestion des clés.

14. Méthode selon l'une quelconque des revendications 1 à 13, dans laquelle les communications entre le client et le système serveur sont réalisées selon un protocole de transfert hypertexte et l'identifiant de session est ajouté comme une partie du nom de chemin dans une adresse URL.

15. Méthode selon la revendication 14, dans laquelle le client modifie le nom de chemin d'une adresse URL actuelle en utilisant un adressage relatif et conserve inchangée la partie de l'identifiant de session du nom de chemin pour les demandes suivantes dans la session.

16. Méthode selon l'une quelconque des revendications 1 à 15, dans laquelle une demande de service concerne un document et l'identifiant de session contient un identifiant utilisateur, comprenant en outre :
le retour du document demandé dans lequel le document est personnalisé pour un utilisateur spécifique en fonction de l'identifiant utilisateur de l'identifiant de session.

17. Méthode selon l'une quelconque des revendications 1 à 16, dans laquelle une demande de service concerne un document et dans laquelle l'identifiant de session comprend un identifiant utilisateur, et comprend en outre :
le retour du document demandé au client ; et
la facturation de l'utilisateur désigné par l'identifiant pour l'accès au document.

18. Méthode d'accès aux informations comprenant la méthode selon l'une quelconque des revendications 1 à 17, et comprenant en outre les étapes consistant à :
fournir un accès aux pages d'informations depuis un client vers un serveur par l'intermédiaire d'un réseau, comprenant les étapes consistant à :
fournir un numéro de téléphone à la demande du client,
mapper le numéro de téléphone vers un identifiant de page cible en utilisant une base de données de traduction,
demander les informations décrites par l'identifiant de page provenant du système serveur, et
afficher à la demande du client une page identifiée par l'identifiant de page.

19. Méthode d'accès aux informations comprenant la méthode selon l'une quelconque des revendications 1 à 16, et comprenant en outre les étapes consistant à :
fournir un accès aux pages d'informations depuis un client vers un serveur par l'intermédiaire d'un réseau, comprenant les étapes consistant à :
fournir un descripteur à la demande du client,
mapper le descripteur vers un identifiant de page cible en utilisant une base de données de traduction,
requérir à la demande du client des informations décrites par l'identifiant de page provenant du système serveur sans action supplémentaire de l'utilisateur, et
afficher une page identifiée par l'identifiant de page à la demande du client.

20. Méthode selon la revendication 19, dans laquelle le descripteur comprend un numéro de téléphone.

21. Méthode selon les revendications 18, 19 ou 20, dans laquelle la base de données de traduction réside dans le système serveur qui renvoie une adresse URL au client dans une commande de réacheminement REDIRECT pour que le client demande les informations en utilisant l'adresse URL.

22. Méthode selon les revendications 19, 20 ou 21, dans laquelle le descripteur comprend un terme descriptif.

23. Méthode selon la revendication 22, dans laquelle le terme comprend le nom d'une société.

24. Méthode selon la revendication 22 ou 23, dans laquelle le terme comprend un nom de produit.

25. Méthode selon la revendication 22, 23 ou 24, dans laquelle le terme est identifié par mappage phonétique.

26. Méthode selon l'une quelconque des revendications 18 à 25, dans laquelle l'identifiant de page cible est une adresse URL.

27. Système d'informations sur un réseau, comprenant :
un moyen pour recevoir des demandes de service provenant de clients et pour déterminer si une demande de service comprend un identifiant de session, les droits d'accès du client étant contenus entièrement dans l'identifiant de session, dans lequel les communications entre le client et le système serveur sont fonction d'un protocole de transfert hypertexte ;
un moyen pour ajouter l'identifiant de session comme une partie d'un nom de chemin dans une adresse URL en réponse à une demande de service initiale dans une session de demandes ; et
un moyen pour satisfaire des demandes de service provenant d'un client et comprenant l'identifiant de session, la demande de service suivante étant traitée dans la session.
